(19) Europäisches Patentamt / European Patent Office / Office européen des brevets

(11) EP 2 128 920 B1

(12) EUROPEAN PATENT SPECIFICATION

(45) Date of publication and mention of the grant of the patent: **02.04.2014 Bulletin 2014/14**

(21) Application number: **08721094.4**

(22) Date of filing: **29.02.2008**

(51) Int Cl.:
***C08F 222/38*** (2006.01)
***C08F 222/10*** (2006.01)
***C08F 220/38*** (2006.01)
***C08G 77/28*** (2006.01)
***C08J 5/22*** (2006.01)
***H01B 1/12*** (2006.01)
***C08F 220/60*** (2006.01)

(86) International application number: **PCT/JP2008/053674**

(87) International publication number: **WO 2008/108302 (12.09.2008 Gazette 2008/37)**

(54) **PROTON CONDUCTIVE FILM, MEMBRANE-ELECTRODE ASSEMBLY, AND SOLID POLYMER ELECTROLYTE FUEL CELL**

PROTONENLEITFÄHIGER FILM, MEMBRAN-ELEKTRODENBAUGRUPPE UND FESTPOLYMERELEKTROLYT-BRENNSTOFFZELLE

FILM CONDUCTEUR DE PROTONS, ENSEMBLE MEMBRANE-ÉLECTRODE ET PILE À COMBUSTIBLE À ÉLECTROLE POLYMÈRE SOLIDE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **02.03.2007 JP 2007053104**

(43) Date of publication of application: **02.12.2009 Bulletin 2009/49**

(73) Proprietor: **SEKISUI CHEMICAL CO., LTD.**
**Osaka-shi**
**Osaka**
**530-8565 (JP)**

(72) Inventors:
- **NAKAJIMA, Hideyasu**
  **c/o SEKISUI CHEMICAL CO., LTD.**
  **Ibaraki 300-4292 (JP)**
- **MIYAMA, Toshihito**
  **c/o SEKISUI CHEMICAL CO., LTD.**
  **Ibaraki 300-4292 (JP)**
- **KONNO, Yoshiharu**
  **c/o SEKISUI CHEMICAL CO., LTD.**
  **Ibaraki 300-4292 (JP)**
- **KANOH, Masashi**
  **c/o SEKISUI CHEMICAL CO., LTD.**
  **Ibaraki 300-4292 (JP)**

(74) Representative: **HOFFMANN EITLE**
**Patent- und Rechtsanwälte**
**Arabellastrasse 4**
**81925 München (DE)**

(56) References cited:
**JP-A- 2002 309 016**
**JP-A- 2003 157 863**
**JP-A- 2003 242 831**
**JP-A- 2004 006 142**
**JP-A- 2005 079 059**
**JP-A- 2006 269 414**
**US-A1- 2004 062 970**
**US-A1- 2006 194 890**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention relates to a proton conducting membrane, a membrane-electrode assembly, and a polymer electrolyte fuel cell.

BACKGROUND ART

Fuel cells have high power generation efficiency and excellent environmental characteristics and are attracting attentions in recent years as a next generation power generator capable of contributing to solving the environmental and energy issues which are serious social problems.

Generally, fuel cells are classified by the kinds of electrolytes into several types. Among these, polymer electrolyte fuel cells (hereinafter, referred to as PEFCs) are smaller and have higher output than the other types. PEFCs are therefore considered as next major generation of small-scale onsite-type power sources, for example including moving body power sources and portable power sources such as vehicle power sources.

A PEFC normally uses hydrogen as fuel. Hydrogen is split into protons (hydrogen ions) and electrons through a catalyst provided on an anode (also referred to as a fuel electrode) side of the PEFC. The electrons are supplied to the outside, used as electricity, and circulated to the cathode (also referred to as an air or oxygen electrode) side of the PEFC. On the other hand, the protons are supplied to a proton conducting membrane (an electrolytic membrane) and move to the cathode side through the proton conducting membrane. On the cathode side, the protons, circulated electrons, and oxygen introduced from the outside are supplied through the catalysts to generate water. That is, the PEFC by itself is a very clean energy source which generates electricity by producing water from hydrogen and oxygen.

In recent years, examinations are being made for fuel cells in which fuel other than hydrogen, such as alcohol, ether, or hydrocarbon, is used as the fuel for fuel cells and protons and electrons are extracted from such fuel through a catalyst. A typical example of such fuel cells is a direct methanol fuel cell (hereinafter, referred to as DMFC) whose fuel is methanol (usually used in a form of aqueous solution). DMFC does not require an external reformer, and the fuel thereof can be easily handled. DMFC is therefore expected most as a small-scale portable power source among the various types of fuel cells.

In a fuel cell such as PEFC or DMFC, the proton conducting membrane is responsible for transporting protons generated on the anode side to the cathode side. The protons are transported in concert with a flow of electrons. In order to obtain high output of the fuel cell, that is, high current density, it is necessary to transport sufficient protons through the proton conducting membrane at high speed. As described above, it is not exaggeration to say that the proton conducting membrane is a key material determining the performance of the fuel cell.

Moreover, the proton conducting membrane also serves as an insulating film for electrical insulation between the anode and cathode sides and a fuel barrier film preventing fuel supplied to the anode side, such as hydrogen, from leaking into the cathode side.

One of current major proton conducting membranes used in DMFCs is a fluorocarbon resin film including a perfluoroalkylene backbone and partially including sulfonic acid groups at ends of perfluorovinyl ether side chains. Examples of such sulfonated fluorocarbon resin films are Nafion (registered trademark) films (Du Pont, see Patent Literature 1), Dow films (Dow Chemical Company, see Patent Literature 2), Aciplex (registered trademark) films (Asahi Kasei Corporation, see Patent Literature 3), and Flemion (registered trademark) films (ASAHI GRASS Co., Ltd).

A Nafion film includes polytetra(or tri)fluoroethylene in the backbone and sulfonic acid groups in side chains. Polytetra(or tri)fluoroethylene is non-polar and repellent while sulfonic acid groups in the side chains are polar and hydrophilic. Accordingly, the Nafion film spontaneously forms a phase-separated structure and therefore includes a structure in which the sulfonic acid groups are collected at high density, which serves as a proton conduction path (see Non-Patent Literature 1). In order to implement high proton conductivity, the proton conducting membranes containing so many acid groups in the electrolyte are proposed as described above.

However, the proton conducting membrane containing a lot of acid groups includes a polar solvent in large amount if the concentration of the contained acid exceeds a certain level. As a result, the proton conducting membrane swells, and since a part of the proton conducting membrane elutes due to the breakdown of the structure, high fuel barrier properties against fuel gas and high resistance to polar solvent can hardly be realized simultaneously.

On the other hand, as for electrolyte membranes for fuel cells, in addition to the above-mentioned fluorocarbon resin films, various types of membranes such as hydrocarbon series films and inorganic films are being developed actively. For example, an organic silicon compound is composed of a silicon-oxygen bond having high bond energy and therefore provides high chemical stability, heat resistance, and oxidation resistance. The organic silicon compound can provide many specific properties depending on the composition thereof and are used in all industries, including electric, electronic, office equipment, building, food, medical, textile, plastic, paper, pulp, and painting resin industries.

Another proton conducting membrane is disclosed which uses the above-described organic silicon compound and includes cross-linked structures composed of silicon-oxygen bonds (for example, see Patent Literature 4). The cross-linked structures composed of silicon-oxygen bonds are comparatively stable even if being exposed to high temperature and high humidity under strongly acidic conditions (in the presence of protons) as the proton conducting membrane is exposed and can be suitably used as the cross-linked structures within a fuel cell membrane.
However, intermolecular force of a silicon carbon bond contained in the membrane to the peripheries thereof is somewhat weaker than that of the silicon-oxygen bond, and impact resistance of this proton conducting membrane to an external pressure derived from a humidity change and the like is low. Accordingly, for example, in the case of using the organic silicon compound as a fuel cell electrolyte membrane for which high proton conductivity under high and low temperature conditions is required, performance deterioration in the proton conductivity and the fuel barrier property, which is caused by temperature variations, sometimes occurs.
Moreover, the constituent composition of organic silicon compound membrane is largely different from that of thermoplastic resin electrodes such as a Nafion (registered trademark) electrode generally used as a fuel cell electrode, in which Nafion (registered trademark) resin is used as an electrode binder, so, the properties thereof are greatly different from each other, and in case of the organic silicon compound membrane and the thermoplastic resin electrode being adhered to each other, the adhesive force therebetween is reduced. Such a reduction in adhesive force results in increasing a contact resistance between electrodes, as a result, the high proton conductivity could be reduced in some cases.

(Cited Literatures)

Patent Literature 1: United States Patent Publication No. 4,330,654
Patent Literature 2: Japanese Patent Laid-open Publication No. 4-366137
Patent Literature 3: Japanese Patent Laid-open Publication No. 6-432665
Patent Literature 4: Japanese Patent Publication No. 3679104
Non-patent Literature 1: J. Polymer Science, Polymer Physics, vol. 19, 1687, 1981

US 2004/062970 A1 describes to a crosslinkable, proton-conducting membrane having a crosslinked structure, which is said to be excellent in heat resistance, durability, dimensional stability and fuel barrier characteristics, and showing excellent proton conductivity at high temperature. The membrane comprises (a) an organic/inorganic hybrid structure (A) covalently bonded to 2 or more silicon-oxygen crosslinks and, at the same time, having a carbon atom, and (b) an acid containing structure (B) having an acid group, covalently bonded to a silicon-oxygen crosslink and having an acidic group.
US 2006/194890 A1 relates to a curable resin composition comprising (a) a compound having at least one ethylenically unsaturated group and at least one ion conductive group, (b) a compound having at least two ethylenically unsaturated groups, (c) an organosilicon compound having at least two SiH groups, (d) a platinum group catalyst, and (e) a solvent. The composition can be dried and cured by heating into a cured film having excellent ionic conduction and serving as electrolyte membrane.

DISCLOSURE OF THE INVENTION

(Problems to be Solved by the Invention)

An object of the present invention is to provide a proton conducting membrane, a membrane-electrode assembly, and a polymer electrolyte fuel cell, which can realize high impact resistance and high polar solvent resistance as well as high proton conductivity, at the same time, can improve adhesion to an electrode, and can improve power generation performance.

(Means for Solving the Problems)

In one aspect, the present invention relates to a proton conducting membrane comprising:

a silicon-oxygen bonding structure (A) containing a cross-linked structure formed by a silicon-oxygen bond, and an acid group-containing structure (B) covalently bonded to a silane compound and containing an acid group, which are coupled to each other by a silicon oxygen bond,
wherein the silicon-oxygen bonding structure (A) is obtained by hydrolysing and polycondensing alkoxysilanes;

wherein the acid group-containing structure (B) includes a structure in which a silane compound ($\alpha$) having a silicon-oxygen bond and a polymerizable unsaturated double bond and an acid group-containing compound ($\beta$), which is selected from the group consisting of 2-acrylamide-2-methylpropane sulfonic acid, 2-(methacryloyloxy)ethylsulfonic acid, 3-sulfopropyl methacrylate, p-stilsulfonic acid, 4,4-diaminostilbenzene-2,2'-disulfonic acid and itaconic acid bis(3-sulfopropyl), are covalently bonded to each other; wherein atoms constituting the acid group and the silicon atom bonded to the silicon-oxygen bonding structure (A) are bonded through a bond of at least four or more consecutive carbon atoms iu the acid group-containing structure (B).

According to the proton conducting membrane of the embodiment, the silicon-oxygen bonding structure (A) as a basic structure of the membrane and the acid group-containing structure (B) are included, and the structure in which the silane compound ($\alpha$) and acid group-containing compound ($\beta$) are covalently bonded to each other is included as the acid group-containing structure (B). Accordingly, the distance between an atom group constituting the acid in the acid group-containing structure (B) and silicon can be long. It is therefore possible to give the proton conducting membrane flexibility, ensure stable proton conductivity, and further improve the impact resistance and polar solvent resistance.

Preferably, the silicon-oxygen bonding structure (A) is a structure represented by the following general formula.

[Chemical Formula 1]

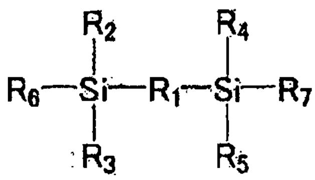

(I)

(wherein, $R_1$ is a chain hydrocarbon group that can include a substituent with a carbon number of 1 to 50 and/or a heteroatom, or is an oxygen atom, $R_2$, $R_3$, $R_4$, $R_6$, $R_6$ and $R_7$ are any of hydrogen atoms, methyl groups, ethyl groups, propyl groups, butyl groups, phenyl groups, methoxy groups, ethoxy groups, propoxy groups, butoxy groups, hydroxyl groups, and O-Si-, and may be the same or different from one another, at least one of $R_1$, $R_2$, $R_3$, $R_4$, $R_6$, $R_6$ and $R_7$ includes an oxygen atom, at least one of $R_2$, $R_3$ and $R_6$ is O-Si concerned with the cross-link, and at least one of $R_4$, $R_5$ and $R_7$ is O-Si concerned with the cross-link.)

Preferably, in a part of the proton conducting membrane including the acid group, atoms constituting the acid group and the silicon atom bonded to the silicon-oxygen bonding structure are bonded through a bond of at least four or more consecutive carbon atoms. Preferably, the acid group-containing compound ($\beta$) encompasses three or more protonatable heteroatoms and is any of acrylamide, acrylate, and methacrylate containing a methylene group. Moreover, the acid group-containing compound ($\beta$) preferably encompasses a sulfonic acid group. The proton conducting membrane may further encompasses a cross-linking agent (C) that has, in a single molecule, two or more functional groups capable of being bonded to the silicon-oxygen bonding structure (A), the silane compound ($\alpha$), or the acid group-containing compound ($\beta$).

A total weight of the silicon-oxygen bonding structure (A) and the silane compound ($\alpha$) is preferably 40 to 120 wt% and more preferably 10 to 70 wt% with respect to the cross-linking agent (C) having at least one polimerizable unsaturated double bond within its bonds concerned.

Preferably, the proton conducting membrane according to the embodiment is composed of a granular structure which is a continuum including particles bonded to each other, and the particles have an average particle size of 3 to 200 nm. Preferably, in the proton conducting membrane, the silicon-oxygen bonding structure (A), acid group-containing structure (B), and cross-linking agent (C) having at least one polymerizable unsaturated double bond within its bonds, are covalently bonded to each other.

Moreover, the proton conducting membrane has the first main surface and the second main surface opposite to the first main surface, and the number of silicon atoms (Xo) in the first main surface is more than the number of silicon atoms ($X_2$) in the second main surface. Furthermore, the number of silicon atoms is preferable to be $X_0/X_2 \geqq 1.3$. At high concentration operation in which the concentration of methanol solution as the fuel is higher than 30 vol%, the first and the second main surfaces are preferable to be joined to the anode and cathode electrodes, respectively. On the contrary, at low concentration operation in which the concentration of methanol solution is 30 vol% or less, the first and second main surfaces are preferably to be joined to the cathode and anode electrodes, respectively. To optimize the junction properties between the proton conducting membrane and electrodes, the membrane may include a membrane-electrode junction layer on the membrane surface. The membrane-electrode junction layer is desirable to include a hydroxyl group-containing structure (P) containing a compound (a) having a hydroxyalkoxy group and a polymerizable inorganic acid component including phosphor and/or inorganic acid polymer (b) as constituent elements. The polymerizable inorganic acid component including phosphor and/or inorganic acid polymer (b) are preferable to include polyphosphoric acid. Furthermore, it is more preferable that the hydroxyl group-containing structure (P) includes polyvinyl alcohol. Moreover, to reinforce multifariously the proton conducting membrane, the polymerizable composition may be impregnated into a polymer material to form the membrane. Note that the polymer material used in such a case is preferably porous.

Furthermore, in the above-mentioned proton conducting membrane, a fuel electrode and an oxygen electrode are arranged, thus a membrane-electrode assembly is provided. Moreover, in a unit cell of a polymer electrolyte fuel cell including the membrane-electrode assembly concerned, or on the outside thereof, a pair of separators which serve as passages of fuel and oxygen are arranged, and a plurality of the adjacent unit cells are coupled to one another, whereby a polymer electrolyte fuel cell is provided.

BRIEF DESCRIPTION OF THE DRAWINGS

FIG. 1 is a schematic view showing an image of a structural example of a proton conducting membrane according to an embodiment;

FIG. 2(a) is a structural view of each component of the proton conducting membrane according to the embodiment before the proton conducting membrane is fabricated; FIG. 2(b) is a structural view showing an example of a bonding state of the fabricated proton conducting membrane; FIG. 2(c) is a view showing an example of an acid group-containing compound (β) and FIG. 2(d) is a view showing another example of the acid group-containing compound (β) and

FIG. 3 is an explanatory view illustrating a surface state of the proton conducting membrane according to the embodiment. In the drawing, reference number 1 indicates a proton conducting membrane; la, first main surface; and 1b, second main surface.

BEST MODE FOR CARRYING OUT THE INVENTION

Next, a description will be made of an embodiment of the present invention with reference to the drawing. In the following description with reference to the drawing, the same or similar reference numerals are assigned to the same or similar portions. However, the drawing is schematic, and it should be noted that a ratio of the respective dimensions, and the like are different from the actual ones. Hence, specific dimensions and the like should be determined in consideration of the following description. Moreover, it is a matter of course that portions different in dimensional relationship and ratio are also included among the drawings.

<Proton Conducting Membrane>

A proton conducting membrane according to an embodiment of the present invention is a cross-linked proton conducting membrane including: a silicon-oxygen bonding structure (A) containing a cross-linked structure by a silicon-oxygen bond; and an acid group-containing structure (B) which is covalently bonded with the silicon-oxygen bond and includes an acid group.

The cross-linked structure composed of the silicon-oxygen bond can be obtained a long time stability even in case of being exposed to high temperature and high humidity under the strongly acidic conditions (due to the existence of protons) like fuel cell membranes, so a proton conducting membrane excellent in heat resistance, durability, and dimensional stability can be formed. Moreover, the silicon-oxygen bond can be easily formed and is available at a low price, so the silicon-oxygen bond can be preferably used as a composition of the fuel cell membrane.

By selecting the number of cross-linking groups, the proton conducting membrane according to the embodiment of the present invention comes not to exhibit an appreciable variation in size regardless of whether the membrane state is a wet one or not, as a result, comes not to produce any change in strength. Accordingly, the proton conducting membrane according to the embodiment is prevented from significantly changing in the structure with temperature like conventional proton conducting membranes composed of polymer material, for example, thus allowing the fuel cell to operate more stably.

1. Silicon-oxygen bonding structure (A)

The proton conducting membrane according to the embodiment of the present invention includes the silicon-oxygen bonding structure (A) as a cross-linked base structure. The silicon-oxygen bonding structure (A) is preferably

represented as an above general formula.

As represented by the general formula described above, the silicon-oxygen bonding structure (A) is composed of only inorganic materials in some cases and is composed of an organic-inorganic complex including organic compounds in some cases. In the case of organic-inorganic complex, a fuel cell membrane with the heat resistance of inorganic materials as well as with flexibility of organic materials can be formed. In case of having such a compound, the molecular structure design between the cross-linked structures enables adjustment of membrane physical properties such as the flexibility being most of all. Even the fuel barrier property, which is one of the most important properties as a fuel cell membrane, can be controlled by controlling crosslink density and structure.

As the silicon-oxygen bonding structure (A), for example, cross-linked structures composed by performing the hydrolysis and the polycondensation for the following can be preferably used, which are: 1,2-bis(triethoxysilyl)ethane; 1,6-bis(trimethoxysilyl)hexane; 1,9-bis(triethoxysilyl)nonane; 1,8-bis(triethoxysilyl)octane; 1,8-bis(diethoxymethylsilyl)octane; 1,4-bis(trimethoxysilylethyl)benzene; 1,4-bis(triethoxysilylethyl)benzene; 1,8-bis(methyldiethoxysilyl)octane; and alkoxysilanes such as tetramethoxysilane, tetraethoxysilane, tetraisopropoxysilane, tetrabutoxysilane, methyltrimethoxysilane, phenyltrimethoxysilane, phenyltriethoxysilane, dimethyldimethoxysilane, phenylmethyldimethoxysilane, ethyltrimethoxysilane, n-propyltrimethoxysilane, i-propyltrimethoxysilane and n-butyltrimethoxysilane. The silicon-oxygen bonding structure (A) may be composed of one of these, which is taken as raw material, or may be composed of two or more of these, which are taken as raw materials. Moreover, such alkoxy groups of the above-mentioned compound do not have to cause a perfect reaction; however, the compound takes a denser structure when the alkoxy groups causes the perfect reaction to form O-Si, and this is preferable from viewpoints of the resistance to methanol permeation and the mechanical strength. Furthermore, those in which the alkoxy groups of the listed compounds are substituted by other alkoxy groups can also be used similarly. Moreover, the present invention is not limited to this.

By using the appropriate silicon-oxygen bonding structure (A), silica cross-linked particles can also be formed. By adjusting a cross-link density and inter-particle bonding strength of the silica cross-linked particles, the strength and flexibility of the proton conducting membrane can also be appropriately controlled.

2. Acid group-containing structure (B)

The proton conducting membrane can provide high proton conductivity by including the following requirements.

1) Existence of a high concentration of acid group
2) Formation of a proton conducting path in which acids are continuously located.

At the time when the fuel cell operates, the protons generated in the anode are supplied to the membrane, and meanwhile, the protons in the membrane are consumed in the cathode. Some protons are present in advance in the proton conducting membrane. In the anode, a concentration of the protons is increased by being supplied with the protons, and in the cathode, a concentration of the protons is decreased by consuming the protons. A concentration gradient of the protons, which occurs in the membrane as described above, is drive force for the proton diffusion from the anode to the cathode. In the case where the protons are not sufficiently present in the membrane, then the protons on the cathode side fall short, and the stable operation of the fuel cell cannot be desired. Hence, in order to provide a proton conducting membrane stably operating even at high temperature, it is necessary to form proton conduction paths, in which the acid groups are present at a high concentration, and the acid groups are arranged continuously.

In the present invention, the acid group-containing structure (B) is covalently bonded with the silicon-oxygen bonding structure to form a high molecular weight polymer, as a result, the state where the membrane contains a high concentration of acid groups can be ensured, at the same time, the proton concentration in the membrane can be increased, thus a membrane allowing the fuel cell to operate stably for a long time can be obtained. Particularly, in the present invention, the acid group-containing structure (B) is a structure including a silane compound ($\alpha$) having a polymerizable unsaturated double bond and an acid group-containing compound ($\beta$) which has an acid group and a polymerizable unsaturated double bond and is covalently bonded with the silane compound ($\alpha$).

FIG. 1 shows a structural image example of the proton conducting membrane. The proton conducting membrane includes at least the silicon-oxygen bonding structure (A) serving as a cross-linked basic structure (a backbone) and the acid group-containing structure (B) having the silane compound ($\alpha$) and acid group-containing compound ($\beta$) which is reacted and covalently bonded with the silane compound ($\alpha$).

Generally, the silicon-oxygen cross-linked structure has a rigid structure, so if the membrane has a lot of high polar part, the degradation of the temperature-dependent proton conductivity and fuel barrier properties can be produced in some cases. In the present invention, as shown in FIG. 1, by bonding the atom group constituting the acid in the acid group-containing compound ($\beta$) through the silane compound ($\alpha$), the cross-linked structure can be formed so that the distance between the atom group constituting the acid and silicon becomes longer than a certain value, so the various properties of the membrane, such as the high fuel barrier properties, strength and the like, can be further improved.

Furthermore, by including more organic parts in the acid group-containing structure (B), the flexibility is added to the proton conducting membrane and the impact resistance becomes strong. Further, by introducing a cross-linking agent (C) as needed, the cross-linked structure with flexibility and rigidity can be obtained, whereby the high impact resistance and high polar solvent resistance of the membrane can be more enhanced.

FIG. 2(a) shows an example of the structure of the silicon-oxygen bonding structure (A), silane compound ($\alpha$), acid group-containing compound ($\beta$), and cross-linking agent (C) constituting the proton conducting membrane according to the embodiment. In the silicon-oxygen bonding structure (A), $R_1$ is a chain hydrocarbon group that can include a substituent with a carbon number of 1 to 50 and/or a heteroatom, or is an oxygen atom, $R_2$, $R_3$, $R_4$, $R_5$, $R_6$ and $R_7$ are any of hydrogen atoms, methyl groups, ethyl groups, propyl groups, butyl groups, phenyl groups, methoxy groups, ethoxy groups, propoxy groups, butoxy groups, hydroxyl groups and O-Si-, and may be the same or different from one another, at least one of $R_1$ to $R_7$ includes an oxygen atom, at least one of $R_2$, $R_3$ and $R_6$ is O-Si concerned with the cross-link, and at least one of $R_4$, $R_6$ and $R_7$ is O-Si concerned with the cross-link. $R_8$ in the silane compound ($\alpha$) is an atom group selected from a group of a substituted and unsubstituted hydrocarbon group and a heteroatom, $R_9$, $R_{10}$ and $R_{11}$ are an atom group including at least one selected from a group of a substituted and unsubstituted hydrocarbon group, a hydrogen atom and a heteroatom, may be the same or different from one another, and at least one of $R_8$, $R_9$, $R_{10}$ and $R_{11}$ constitutes a silicon-oxygen bond. $R_{12}$ in the acid group-containing compound ($\beta$) is an atom group selected from a group of a substituted and unsubstituted hydrocarbon group and a heteroatom, X is an atom group with a pKa of 5 or less, pKa being defined by an acid dissociation constant in water. $R_{13}$ in the cross-linking agent (C) is an atom group selected from a group of a substituted and unsubstituted hydrocarbon group and a heteroatom.

FIG. 2(b) shows a structural image view of the proton conducting membrane including at least the silicon-oxygen bonding structure (A) and acid group-containing structure (B). In FIG. 2(b), the silicon-oxygen bonding structure (A) is bonded to the acid group-containing structure (B), which includes the silane compound ($\alpha$) and acid group-containing compound ($\beta$) covalently bonded to each other, through a silicon-oxygen bond. The acid group-containing compound ($\beta$) constituting the acid group-containing structure (B) is bonded to another acid group-containing compound ($\beta$) by the cross-linking agent (C), which is changed into a cross-linking agent (C') by the cross-linking reaction. The another acid group-containing compound ($\beta$) may be bonded to still another acid group-containing compound ($\beta$) or may be bonded to the silane compound ($\alpha$). In FIG. 2(b), an atom group constituting the acid (an acid group (X) 20) in the acid group-containing structure (B) is bonded to the silicon-oxygen bonding structure (A) through the silane compound ($\alpha$). Herein, a silicon atom 21 of the silane compound ($\alpha$) constituting the acid group-containing structure (B) and an oxygen atom 22 constituting the silicon-oxygen bonding structure (A) are bonded with a silicon-oxygen bond. In such a manner, the atom group constituting the acid (acid group (X) 20) and the silicon atom 21 derived from the silane compound ($\alpha$) are bonded through a molecular chain 23 including carbon bonds formed by bonding of the organic part of the silane compound ($\alpha$) and the organic part, of the acid group-containing compound ($\beta$). Since the silane compound ($\alpha$) and acid group-containing compound ($\beta$) have polymerizable unsaturated double bonds, by a covalent bond of the the silane compound ($\alpha$) and acid group-containing compound ($\beta$), the atom group constituting the acid (acid group (X) 20) and the silicon atom 21 derived from the silane compound ($\alpha$) are bonded at a certain distance apart more than a distance of at least four carbon bonds by a covalent bond of the silane compound ($\alpha$) and acid group-containing compound ($\beta$).

Examples of FIGS. 1, 2(a), and 2(b) are just examples, and it is obvious that the structure of the proton conducting membrane of the present invention is not limited to these drawings. For example, in addition to the state where ($\alpha$) and ($\beta$) are bonded, ($\alpha$) and ($\alpha$) or ($\beta$) and ($\beta$) may constituted a polymer, or (C) may form a cross-linked structure together with (A), ($\alpha$), ($\beta$), or (C).

In the proton conducting membrane according to the present invention, the atom group of the acid group in the acid group-containing structure (B) is preferable to be bonded to silicon having a siloxane bond at a distance apart more than a distance of at least four carbon bonds. This can prevent damage and property degradation of the membrane due to rapid intrusion of the polar solvent which could occur in the case where the distance of the acid group-silicon bond is short.

Moreover, in the proton conducting membrane according to the present invention, the silane compound ($\alpha$) is bonded so that a reaction rate of polymerizable unsaturated double bonds in the silane compound ($\alpha$) is preferably 30% or more and more preferably 50% or more. A reaction rate of polymerizable unsaturated double bonds in the acid group-containing compound ($\beta$) is preferably 30% or more and more preferably 50% or more. Herein, "the reaction rate of polymerizable unsaturated double bonds" refers to a ratio of the number of double bonds which are originally contained in the compounds introduced at fabricating the membrane as 100% to that minus the number of unsaturated double bonds which remain unchanged and are contained in the fabricated membrane.

With regard to the reactive polymerization of the silane compound ($\alpha$) in the proton conducting membrane, preferably, the relationship of the following equation (1) is satisfied.

$$p_{\alpha-\alpha}/p_{\alpha-\beta} < 1 \quad \cdots(1)$$

Herein, $p_{\alpha\text{-}\alpha}$ is a number of polymers of silane compounds ($\alpha$) and polymers of silane compounds ($\alpha$) polymerized through (C), and $p_{\alpha\text{-}\beta}$ is a number of polymers of silane compounds ($\alpha$) and acid group-containing compound ($\beta$) and polymers of silane compounds ($\alpha$) and acid group-containing compound ($\beta$) polymerized through (C).

In the proton conducting membrane of the present invention, it is preferable that protons are attached to 5% or more of all unshared electron pairs of protonatable heteroatoms in the membrane.

Furthermore, as shown in FIG. 3, a proton conducting membrane 1 in the present invention includes first and second main surfaces 1a and 1b, and the number ($X_0$) of silicon atoms existing in the first surface is more than the number ($X_2$) of silicon atoms existing in the second surface.

Preferably, when a contact surface between an anode electrode and the proton conducting membrane 1 is defined as the origin 0, the number of silicon atoms from the origin 0 to p $\mu$ m as Xp, and the concentration of methanol aqueous solution as Cm vol%, a proton conducting membrane with a thickness of z $\mu$ m is preferable to have a relationship satisfying the following relational equation (2), equation (3), relational equation (4), and equation (5).

$$X_0 \geqq X_p \geqq X_z \; (0 \leqq p \leqq z) \quad \cdots(2)$$

$$X_0/X_z \geqq 1.3 \quad \cdots(3)$$

$Cm > 30$ (the surfaces 1a and 1b are joined to the anode and cathode, respectively) ···(4)

$Cm \leqq 30$ (the surfaces 1a and 1b are joined to the cathode and anode, respectively) ···(5)

Such a membrane can be obtained by forming a film of polymerizable components as raw materials of the proton conducting membrane according to the embodiment and performing centrifugation or the like before final curing so that the centrifugal force is applied in a proper direction in order to realize a desired distribution of the number of silicon atoms.

3. Silane Compound ($\alpha$)

As the silane compound ($\alpha$) concerned with the structure of the acid group-containing structure (B), suitably used are 3-(trimethoxysilyl)propyl acrylate, 3-(methyldimethoxysilyl)propyl acrylate, 3-(triethoxysilyl)propyl acrylate, 3-(methyldiethoxysilyl)propyl acrylate, trimethoxyvinylsilane, triethoxyvinylsilane, 3-(trimethoxysilyl)propyl methacrylate, 3-(methyldimethoxysilyl)propyl methacrylate, 3-(triethoxysilyl)propyl methacrylate, 3-(methyldiethoxysilyl)propyl methacrylate, p-styryltrimethoxysilane, p-styryltriethoxysilane, and the like. As the compound for use in the present invention, a compound that has the silicon-oxygen bond and the unsaturated double bond is particularly preferable.

In the proton conducting membrane according to the present invention, the content ratio of the silicon-oxygen bonding structure (A) and silane compound ($\alpha$) to the cross-linking agent (C) is preferably 40 to 120 wt% and more preferably 60 to 100wt%. When the content ratio is less than 40 wt%, the composition of the membrane after curing becomes non-uniform and power generating performance has a tendency to be worse. On the other hand, when the content ratio exceeds 120 wt%, in some cases, the durability of the membrane against external stimuli such as thermal impact and pressure is reduced, and the proton conductivity becomes low.

Furthermore, the content ratio of the silane compound ($\alpha$) to the cross-linking agent (C) is preferably 10 to 70 wt% and more preferably 20 to 50 wt%. When the content ratio is less than 10 wt%, the composition of the membrane after curing becomes non-uniform and power generating performance has a tendency to be worse. On the other hand, when the content ratio exceeds 70 wt%, in some cases, the durability of the membrane against external stimuli including thermal impact and pressure is reduced, and the proton conductivity becomes low.

4. Acid group-containing compound (β)

As the acid group-containing compound (β) concerned with the structure of the acid group-containing structure (B), a compound selected from 2-acrylamide-2-methylpropane sulfonic acid, 2-(methacryloyloxy)ethylsulfonic acid, 3-sulfopropyl methacrylate, p-stilsulfonic acid, 4,4-diaminostilbenzene-2,2'-disulfonic acid, itaconic acid bis(3-sulfopropyl), is used.

As examples of the acid group-containing compound (β), FIGS. 2(c) and 2(d) show the 2-(methacryloyloxy)ethylsufonic acid 30 and the 2-acrylamide-2-methylpropane sulfonic acid 40. In FIG. 2(c), The 2-(methacryloyloxy)ethylsufonic acid 30 is a methacrylic acid ester including a sulfonic acid group 31 as the acid group and a methacryloyl group 32. The methacryloyl group 32 has a polymerizable unsaturated double bond 32a. The 2-(methacryloyloxy)ethylsufonic acid 30 includes three or more protonatable heteroatoms (herein, oxygen atoms). A sulfur atom 33 constituting the sulfonic acid group 32 and an oxygen atom 34 constituting an ester bond are bonded to each other through a carbon atom bond 35. The bond 35 has a straight chain structure including two methylene group coupled to each other. The 2-(methacryloyloxy)ethylsufonic acid 30 is bonded to the silicon-oxygen bonding structure (A) through the silane compound (α). The sulfur atom 33 constituting the sulfonic acid group 31 in the 2-(methacryloyloxy)ethylsufonic acid 30 and the silicon atom of the silane compound (α) are bonded through a bond of two consecutive carbon atoms derived from the bond 35. Moreover, since the 2-(methacryloyloxy)ethylsufonic acid 30 includes a polymerizable unsaturated double bond (the methacryloyl group 32), by a covalent bond of the silane compound (α) and the 2-(methacryloyloxy)ethylsufonic acid 30, the sulfur atom 33 constituting the sulfonic acid group 31 and a silicon atom 21 derived from the silane compound (α) are bonded at a distance apart of not less than a distance of at least four carbon bonds.

In FIG. 2(d), the 2-acrylamide-2-methylpropanesulfonic acid 40 includes a sulfonic acid group 41 as an acid group and an acrylamide group 42. The acrylamide group 42 includes a polymerizable unsaturated double bond 42a. The 2-acrylamide-2-methylpropanesulfonic acid 40 includes three or more protonatable heteroatoms (herein, oxygen atoms). A sulfur atom 43 constituting the sulfonic acid group 41 and a nitrogen atom 44 constituting the acrylamide group 42 are coupled through a carbon atom bond 45. This bond 45 has a straight chain structure including two carbon atoms coupled to each other. The 2-acrylamide-2-methylpropanesulfonic acid 40 is bonded to the silicon-oxygen bonding structure (A) through the silane compound (α). The sulfur atom 43 constituting the sulfonic acid group 41 of the 2-acrylamide-2-methylpropanesulfonic acid 40 and a silicon atom of the silane compound (α) are bonded through a bond of the two consecutive carbon atoms derived from the bond 45. Moreover, since the 2-acrylamide-2-methylpropanesulfonic acid 40 includes a polymerizable unsaturated double bond (the acrylamide group 42), by a covalent bond of the silane compound ( α ) and the 2-acrylamide-2-methylpropanesulfonic acid 40, the sulfur atom 43 constituting the sulfonic acid group 41 and the silicon atom 21 derived from the silane compound (α) are bonded to each other at a distance apart of not less than a distance of at least four carbon bonds.

5. Other additives

In the proton conducting membrane according to the present invention, the cross-linking agent (C) may be further contained, and a compatibilizing agent (D) may be further contained.

As the cross-linking agent (C), a cross-linking agent that has, in a single molecule, two or more functional groups bondable to the silane compound (α) and the acid group-containing compound (β), which are the constituent components of the acid group-containing structure (B), is preferable. As the cross-linking agent (C), for example, hydrocarbon cross-linking agents such as N,N'-methylenebis (acrylamide), the neopentyl glycol diacrylate, 1,4-bis(acryloyloxy)butane, 1,3-bis(methacryloyloxy)-2-propanol, trimethylolpropane triacrylate, trimethylolpropane trimethacrylate, 1-(acryloyloxy)-3-(methacryloyloxy)-2-propanol, divinylbenzene, 3-(methacryloylamino)propyl trimethyl ammonium chloride and vinyl methacrylate can be preferably used. Moreover, a fluoro-monomer such as 2,2,2-trifluoroethylacrylate and 2,2,2- trifluoroethylmethacrylate may be contained in the cross-linking agent (C).

The mixing ratio of the cross-linking agent (C) is preferable to satisfy at least any one of the following equations (6) and (7). Herein, $N_f$, $N_m$, and $N_n$ indicate the number of functional groups, the molecular weight, and the number of moles of the cross-linking agent (C), respectively, and $B_n$ indicates the number of moles of acrylate or methacrylate (β).

$$N_m/N_f < 200 \quad \cdots(6)$$

$$N_n/B_n < 1 \quad \cdots(7)$$

If the above equations (6) and (7) are not satisfied, the concentration of the acid groups in particles can be

reduced, thus resulting in lower proton conductivity.

In the proton conducting membrane according to the present invention, desirably, the electrolyte has a granular structure which is a continuum including particles bonded to each other. Furthermore, preferably, the proton conducting membrane includes the acid groups in the particle surfaces to form proton paths between the particles. With such a structure, the mechanical strength of the electrolyte is increased, and the protons are efficiently transported. Herein, each particle is preferably spherical but may be amorphous. The amorphous particle refers to a particle which does not include a complete curved surface and includes angled portions in a part or all of the same. The average particle size is preferably 3 to 200 nm and more preferably 10 to 100 nm. If the average particle size exceeds 200 nm, the face area of each particle responsible for conducting protons is reduced, thus resulting in low conductivity. Moreover, the proton conducting membrane is made brittle because of excessively large gaps between the particles. On the other hand, the proton conducting membrane with an average particle size of 3 nm or less becomes nearly a uniform layer and, in some cases, proton transport cannot be done efficiently with a small amount of acid groups. More preferably, the average particle size is 10 to 100 nm. By setting the average particle size within the above range, sufficient strength of the proton conducting membrane can be ensured, while proton conducting paths can be kept sufficiently. The particle size can be directly obtained from, for example, an electron micrograph of a field emission scanning electron microscopy (FE-SEM) or the like and can be also obtained by other means such as small angle X-ray scattering. Further, as for the distribution of particle size, either the continuum may be composed of particles of uniform particle size or the continuum may be composed of particles of non-uniform particle size. Herein, when the particle size distribution is uniform, through depending on the particle size, gaps are geometrically liable to be formed, thus high ion conductivity can possibly be exhibited. On the other hand, a wide range of particle size distribution allows dense packing, which contributes to an improvement in fuel gas barrier properties and an enhancement in strength of the membrane. Therefore, it is desirable that the particle size distribution is selected according to the state of usage. The particle size control can be done by adjusting the conditions including the structure and molecular weights of the raw materials for use, the type and concentration of the solvent, reaction temperature, and the like.

Note that, in order to enhance the strength of the proton conducting membrane, the membrane may be formed by immersing the above-described additive into a (porous) polymer material. As the raw material of the polymer material, for example, a polymer material composed of fluorine resin, polyethylene, or polyimide can be used. As the polymer material composed of the fluorine resin, the polyethylene, or the polyimide, a porous material is used, in which a thickness is 20 to 100 $\mu$m, a pore diameter is 0.05 to 0,2 $\mu$m, and a porosity is 60% or more. It is preferable that the porous material be subjected to hydrophilic treatment. As the fluorine resin, polytetrafluoroethylene can be suitably used.

6. Membrane-Electrode junction Layer

A membrane-electrode junction layer according to the embodiment of the present invention is a proton conducting material used for joining the proton conducting membrane and electrodes, and includes a hydroxyl group-containing structure (P) as a polymer material containing acid groups.

By including the hydroxyl group-containing structure (P), when the proton conducting membrane and the electrodes are joined, acid groups can be located in the interface between the proton conducting membrane and an electrode at high concentration. Accordingly, the concentration of protons in the interface can be increased, thus a stable operation of the fuel cell for a long time can be attained. Moreover, it is possible to optimize junction properties to various types of electrodes.

On the other hand, with the membrane-electrode junction layer, methanol cross over (MCO) can be prevented even when high concentration fuel of methanol or the like is introduced, thus a proton conducting membrane which possibly suppresses a power generating performance reduction due to fuel permeation can be provided.

The membrane-electrode junction layer is preferable to include, as constituent elements of the hydroxyl group-containing structure (P), a compound (a) having a hydroxyalkoxy group and a polymerizable inorganic acid component containing phosphor and/or inorganic acid polymer (b). In this case, the weight ratio in mixing (b) and (a) defined by [(b)/(a)] is preferably 0.5 to 2 and more preferably, 1 to 1.8. When [(b)/(a)] is less than 0.5, the proton conductivity is reduced in some cases. When [(b)/(a)] is more than 2, the durability to the polar solvent is reduced in some cases. The ion exchange capacity (IEC) defined by (the number of dissociated protons (mmol))/(weight (g)) of the hydroxyl group-containing structure (P) is preferably 0.5 to 5 and more preferably 2 to 4. When IEC was less than 0.5, there appeared a tendency that the proton conductivity was not sufficiently exhibited when high concentration fuel was used. Further, when IEC was more than 5, the durability to the polar solvent was degraded in some cases. Thus, a high power generation performance can be exhibited even in case of using high concentration fuel, a high fuel barrier character can be realized, and the joint strength of the membrane and electrode can be further increased.

As the compound (a) having a hydroxyalkoxy group, a compound having any one of a hydroxymethoxy group, a hydroxyethoxy group, and a hydroxypropoxy group as the hydroxyalkoxy group is preferable to be included. The molecular weight per one hydroxyl group in the compound (a) is preferably 30 or more and 300 or less. When the

molecular weight per one hydroxyl group was less than 30, the interaction between matters was small, and the resistance to polar solvent was degraded in some cases. When the molecular weight per one hydroxyl group was more than 300, a higher content of (a) was required to provide the effect of (a), as a result, there appeared a tendency that the power generation performance became worse. Moreover, the compound (a) may include a polymerizable unsaturated double bond, in this case, the molecular weight per one polymerizable unsaturated double bond is preferably 100 or more and 300 or less. When the molecular weight per one polymerizable unsaturated double bond was less than 100, the interaction between matters was small, and the resistance to polar solvent was degraded in some cases. When the molecular weight per one hydroxyl group was more than 300, a higher content of (a) was required to provide the effect of (a), as a result, there appeared a tendency that the power generation performance became worse.

As the compound (a) having the hydroxyalkoxy group, for example, at least one of a hydroxyl group-type low-polymer material, a hydroxyl group-type monomer material, and a hydroxyl group-type organic/inorganic hybrid material is used.

As the hydroxyl group-type low-polymer material, 1-3-bis(2,3-dihydroxypropoxy)-2-propanol can be suitably used. The other examples thereof may be bis(2,3-dihydroxypropyl)ether, 1,2,3-propanetriol, glyceroltriglycidyl ether, glyceroltripropoxylate triglycidyl ether, glycerol triacetate, and the like.

As the hydroxyl group-type monomer, glycerol 1,3-diglycerolate diacrylate can be suitably used. The other examples thereof may be 1,3-dimethacrylate glycerol, methylidene glycerol, glycerol monomethacrylate, glycerol monoacetate, 3-(acryloyloxy)-2-hydroxypropyl methacrylate, 3-aryloxy-1,2-propanediol, and the like.

As the hydroxyl group-type organic/inorganic hybrid material, glycerol-2-phosphate disodium salt n-hydrate can be suitably used. The other examples thereof may be compounds obtained by reaction of sodium silicate n-hydrate and the above-mentioned hydroxyl group-type low-polymer material or a hydroxyl group-type monomer material.

As the polymerizable inorganic acid component and/or inorganic acid polymer (b), for example, the polyphosphoric acid can be suitably used. The other examples thereof may be compounds obtained by reaction of the sodium phosphorate n-hydrate and another polymerizable inorganic component.

As the hydroxyl group-containing structure (P), for example, polyvinyl alcohol may be further contained. The degree of polymerization of the polyvinyl alcohol is preferably 3000 or more and more preferably, 4000 or more. When the degree of polymerization was less than 3000, the resistance to polar solvent tended to be reduced. The degree of sapofinication of the polyvinyl alcohol is preferably 95% or more and more preferably, 99% ore more. When the degree of sapofinication was less than 95%, the resistance to polar solvent tended to be reduced. Moreover, as a cross-linking material capable of cross-link hydrophilic resin, dihydrazides, tryhydrazides, dicarboxylic acids, trycarboxylic acids, diamines, triamines, dialdehydes, trialdehydes, and the like may be used. As the hydroxyl group-containing structure (P), the acid group-containing structure (H) may be further contained.

The acid group-containing structure (H) is preferably a polymer obtained by polymerizing monomers such as vinyl sulfonic acid, arylsulfonic acid, 2-acrylamide-2-methylpropane sulfonic acid, styrene sulfonic acid, 2-(methacryloyloxy)ethylsulfonic acid, 3-sulfopropyl methacrylate, 4,4'-diaminostylbenzene-2,2'-disulfonic acid, and itakonic acid bis(2-sulfopropyl).

A monomer unit which includes a functional group capable of being bonded to the monomer constituting the hydroxyl group-containing structure (P) and does not have an acid group, or a cross-linking agent including a plurality of functional groups capable of being bonded to the hydroxyl group-containing structure (P) or the monomer constituting the hydroxyl group-containing structure (P), may be further contained. For example, methyl(meta)acrylate, ethyl(meta)acrylate, (meta)acrylamide, styrene, N,N'-methylene bis(acrylamide), neopentyl glycol diacrylate, 1,4-bis(acryloyloxy)butane, 1,3-bis(methacryloyloxy)-2-propanol, trimethylolpropane triacrylate, trimethylolpropane trimethacrylate, 1-(acryloyloxy)-3-(methacryloyloxy)-2-propanol, divinylbenzene, 3-(methacryloylamino)propyl trimethyl ammonium chloride, vinyl methacrylate, and the like can be suitably used.

Moreover, as the acid group-containing structure (H) containing silane, a structure which includes an acid group and is capable of being bonded to a cross-linked structure of the membrane through a Si-O bond, which is represented by the following structural formula (II), is mentioned.

[Chemical Formula 2]

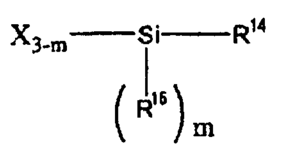

(II)

(wherein, X is a -0- bond or a OH group, which is concerned with the cross-link, $R^{14}$ is a molecular chain group having at least one acid group, $R^{15}$ is any of a methyl group, an ethyl group, a propyl group and a phenyl group, and m is any

of 0, 1, and 2.)

At this time, $R^{14}$ has at least one acid group, and is bonded to the cross-linking group by the covalent bonding. As the acid group, a variety of acids such as sulfonic acid, phosphonic acid, carboxylic acid, sulfuric acid, phosphoric acid and boric acid can be used. In particular, the sulfonic acid is preferably used, which has a low pKa, is capable of sufficiently ensuring the concentration of the protons, and is also thermally stable.

In the case where the acid group is sulfonic acid, it is preferable that $R^{14}$ is a structure that is represented by the following formula (III).

[Chemical Formula 3]

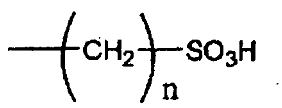

(III)

(wherein, n is an integer of 1 to 20.)

The molecular structure between the sulfonic acid and the cross-linked structure is not particularly limited; however, in terms of the object of the present invention, it is necessary that molecular structure be excellent in heat resistance, acid resistance, oxidation resistance, and the like. As one of the structures which meet these requirements, there is a polymethylene chain represented by the above formula (III). In the structure of the formula (III), the polymethylene chain is not branched, and the sulfonic acid group is present on a terminal end of the polymethylene chain.

Among them, 3-trihydroxysilyl propyl sulfonic acid that is one of raw materials of a structure in where n is 3 is commercially marketed by Gelest, Inc., a synthesis method thereof using allyl bromide as a raw material is also already established, and the 3-trihydroxysilyl propyl sulfonic acid concerned is easily available. Accordingly, the 3-trihydroxysilyl propyl sulfonic acid can be especially preferably used. Moreover, a cured body is fabricated by using, as a raw material, 3-mercaptopropyl trimethoxysilane (CHISSO CORPORATION, product name: "Sila Ace S-810"), and a mercapto group of this cured body is oxidized, whereby the structure of the above formula (III)can also be realized.

Furthermore, a cured body is fabricated by using, as a raw material, an oligomer or polymer, which has structure of the following formula (IV), and a mercapto group of this cured body is oxidized, whereby the structure of the above formula (III) can also be realized.

[Chemical Formula 4]

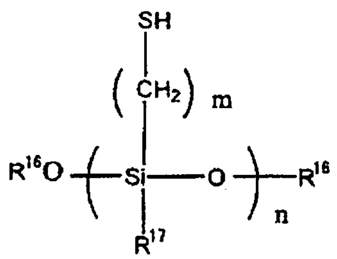

(IV)

(wherein, $R^{16}$ is any of a H group, a $CH_3$ group, a $C_2H_5$ group, a $C_3H_7$ group and a $C_6H_5$ group, $R^{17}$ is any of the $CH_3$ group, the $C_2H_5$ group, the $C_3H_7$ group, the $C_6H_5$ group, an OH group, an $OCH_3$ group, an $OC_2H_5$ group, an $OC_6H_5$ group and the O-Si bond, m is an integer of 1 to 20, and n is an integer of 3 to 500.)

Herein, one in which, in the above formula (IV), $R^{17}$ is the $OCH_3$ group, m is 3 and n is 10 is commercially marketed by Shin-Etsu Chemical Co., Ltd (X-41-1805).

In addition, as a bonding agent, inorganic powder, such as silica powder, calcium powder, ceramic powder, talc, or kaolin, may be added to the proton conducting material. As the silica powder, hollow silica particles (silica balloon), alkali-free glass, and the like can be preferably used.

<Polymer Electrolyte Fuel Cell>

By joining the above-mentioned proton conducting membrane and gas diffusion electrodes, a membrane-electrode assembly can be obtained. Moreover, as a unit cell, the membrane-electrode assembly concerned, and a pair of separators which serve as passages of the fuel and the oxygen can be arranged on the outsides of the membrane-electrode assembly, and a plurality of the adjacent unit cells are coupled to one another, whereby a polymer electrolyte fuel cell can also be obtained.

<Manufacturing Method of Proton Conducting Membrane>

The cross-linked proton conducting membrane which includes the silicon-oxygen bonding structure (A) containing a cross-linked structure by a silicon-oxygen bond and the acid group-containing structure (B) covalently bonded to the silicon-oxygen bond and with an acid group, for example, can be manufactured by the following method. Note that, the following manufacturing method is an example, and it is obvious that the proton conducting membrane can be manufactured by other various kinds of manufacturing methods.

The proton conducting membrane according to the embodiment of the present invention can be fabricated by: a first step of preparing a mixture containing a mercapto group-containing compound (E) that has a mercapto group, and has a hydrolytic silyl group covalently bonded to the mercapto group and capable of a condensation reaction, and/or a silanol group, and containing a polarity control agent (F); a second step of forming a polymerizable composition by mixing a silicon-oxygen structure (A), a silane compound ($\alpha$) and an acid group-containing compound ($\beta$) into the mixture obtained in the first step; a third step of depositing the polymerizable composition obtained in the second step; a fourth step of constructing a silicon-oxygen cross-linked structure by hydrolyzing and condensing a hydrolytic silyl group and/or by condensing a silanol group; and a fifth step of converting the mercapto group in the membrane into a sulfonic acid group by oxidation, and introducing the sulfonic acid group.

- First step

In the first step, the mixture containing the mercapto group-containing compound (E) that has the the mercapto group, and has the hydrolytic silyl group covalently bonded to the mercapto group and capable of the condensation reaction, and/or the silanol group, and containing the polarity control agent (F) is prepared.

(i) Mercapto group-containing compound (E)

The mercapto group-containing compound (E) is not particularly limited as long as it has the mercapto group, and has the hydrolytic silyl group covalently bonded to the mercapto group and capable of the condensation reaction, and/or the silanol group.

As examples of the mercapto group-containing compound (E), for example, illustrated are 3-mercaptopropyl trimethoxysilane, 3-mercaptopropyl triethoxysilane, 3-mercaptopropyl tripropoxysilane, 3-mercaptopropyl tributoxysilane, 2-mercaptoethyl trimethoxysilane, 2-mercaptoethyl triekithoxysilane, 2-mercaptoethyl tripropoxysilane, 2-mercaptoethyl tributoxysilane, mercaptomethyl trimethoxysilane, 3-mercaptopropyl methyldimethoxysilane, 3-mercaptopropyl methyldiethoxysilane, 3-mercaptopropyl methyldipropoxysilane, 3-mercaptopropyl methyldibuthoxysilane, 3-mercaptopropyl ethyldimethoxysilane, 3-mercaptopropyl butyldiethoxysilane, 3-mercaptopropyl phenyldimethoxysilane, mercaptomethyl methyldiethoxysilane, and the like. However, the present invention is not limited to these.

Among them, the 3-mercaptopropyl trimethoxysilane (Shin-Etsu Corporation) is available in a large amount at a low price, and can be preferably used.

Note that, as the mercapto group-containing compound (E), a condensate of a mercapto group-containing compound, which is obtained by condensing the mercapto group-containing compound, may be used.

(ii) Polarity Control Agent (F)

The polarity control agent (F) is a structure control agent for forming particles, and can be suitably used in the present invention.

In the proton conducting membrane of the present invention, it is essential that matters (hydrogen ions or hydrates thereof) can diffuse and move. Accordingly, it is preferred to form proton conducting paths for transporting ions into the membrane, and gaps between the particles are responsible for the proton conducting paths.

In the proton conducting membrane of the present invention, the polarity control agent (F) is used to efficiently form such particles and gaps between the particles.

Usually, if an inorganic material such as tetraethoxysilane is hydrolyzed and condensed in a similar manner and heated enough (for example, 800°C), a glass-like dense cross-linked product is obtained, and pores corresponding to ion channels are not formed. Such a process of hydrolysis, condensation, and gelation (sol- gel reaction) of alkoxysilane has been examined in detail. The examinations thereof are organized in, for example, Brinker, et. al, "SOL-GEL SCIENCE" (Academic press, Inc. 1990), Sakka, "Chemistry of Sol-gel Method" (Agune Shofu Sha, 1988), and the like. In the sol-gel reaction, particle growth, particle binding, and densification sequentially occur. Typical alkoxysilane materials are

already analyzed in detail, and the reaction conditions thereof and the like are known.

In the proton conducting membrane of the present invention, an alkoxysilane material having a substitution group is used as a raw material, and control of particle size of particles, control of binding of particles, and control of interparticle gaps involved are important. After conducting various examinations to achieve this, it was found that adding the polarity control agent (F) enables formation of a continuum of particles and control of interparticle gaps involved.

Desirably, the polarity control agent (F) is an organic liquid and soluble in water. In the case where a solvent is used in the first step (later described), if the polarity control agent (F) is soluble in water, the solubility of the mercapto group-containing compound (E) into the solvent can be adjusted, thus enabling control of moderate particle size and interparticle gaps. Furthermore, there is another advantage that the polarity control agent (F) can be easily extracted from the fabricated membrane by water washing.

Moreover, the polarity control agent (F) is preferable to have a boiling point of 100°C or more and a melting point of 25°C or more. When the boiling point of the polarity control agent (F) is too low, the polarity control agent (F) vaporizes during the condensation reaction performed to form the membrane (mostly under heating conditions), then the controls of particle size control of particles and of interparticle gaps become insufficient, as a result, a sufficient conductivity can not be ensured. Accordingly, as for the boiling point of the polarity control agent (F), it is preferably higher than the boiling point of the solvent at least when the solvent is used in the first step, and specifically preferably 100°C or more, more preferably 150°C or more, and still more preferably 200°C or more.

Moreover, when the intermolecular interaction of the polarity control agent (F) is too strong, the polarity control agent (F) could be solidified to form a large domain besides the interparticle gaps, in such a case, the membrane strength could be reduced, or fuel gas barrier properties of the membrane could be degraded. The intensity of the intermolecular interaction of the polarity control agent (F) is nearly correlated with the melting point of the polarity control agent (F), which can serve as an indicator of the intermolecular interaction. The melting point of the polarity control agent (F) of the present invention is preferably 25°C or less. The polarity control agent (F) having a melting point of 25°C or less can be expected to have a moderate intermolecular interaction and can be suitably used, the melting point of the polarity control agent (F) is more preferably 15°C or less.

As such an organic matter, mentioned are the one having a polar substituent such as the hydroxyl group, the ether group, the amide group, and the ester group, the one having an acid group such as the carboxylic acid group and the sulfonic acid group or salt thereof, the one having a base such as amine or salt thereof, and the like. Among them, as for the acid group, base, and salt thereof, in the case of using catalysts at the hydrolysis and condensation, it is necessary to attend the interaction with these catalysts, therefore, more preferably, non-ionic ones can be preferably used.

Specifically, mentioned are: glycerin and a derivative thereof; ethylene glycol and a derivative thereof; ethylene glycol polymers (diethylene glycol, triethylene glycol, tetraethylene glycol, polyethylene glycol with a variety of molecular weights, and the like); saccharides such as glucose, fructose, mannite, sorbit and sucrose; polyvalent hydroxyl group compounds such as pentaerythritol; water-soluble resins such as polyoxyalkylene, polyvinyl alcohol, polyvinyl pyrrolidone and acrylic acid; carbonate esters such as ethylene carbonate and propylene carbonate; alkyl sulfur oxide such as dimethyl sulfoxide; amides such as dimethyl formamide; polyoxyethylene alkyl ethers such as ethylene glycol monomethyl ether; and the like; however, the present invention is not limited to these.

Moreover, ethylene glycol (mono/di)alkyl ethers obtained by substituting a part or all of OHs at ends of the above ethylene glycols with alkyl ethers are preferably used. Examples thereof are ethylene glycols, such as monomethyl ether, dimethyl ether, monoethyl ether, diethyl ether, monopropyl ether, dipropyl ether, monobutyl ether, dibutyl ether, monopentyl ether, dipentyl ether, monodicyclopentenyl ether, monoglycidyl ether, diglycidyl ether, monophenyl ether, diphenyl ether, and monovinylether divinyl ether. Moreover, a part or all of OHs at the ends of the ethylene glycols may be substituted with esters. Examples thereof are monoacetate and diacetate of the ethylene glycols.

When an acid and a salt thereof can be used, the polarity control agent (F) may be acids including acetic acid, propionic acid, dodecylsulfonic acid, benzenesulfonic acid, dodecylbenzenesufonic acid, and toluenesulfonic acid and the salts thereof. When a base and a salt thereof can be used, the polarity control agent (F) may be ammonium salts such as trimethylbenzylammonium chloride, amines such as N,N-dimethylbenzylamine, and salts thereof. Furthermore, a zwitterion compound such as an amino acid such as sodium glutamate can be used.

The polarity control agent (F) can be an inorganic salt or the like. However, inorganic salts generally have strong cohesion (a high melting point). Accordingly, even if being added to a mixture containing mercapto group-containing compound (E), inorganic salt is difficult to finely disperse at a molecular level and is highly likely to be large crystals or amorphous solid and form large aggregates which are unfavorable to the membrane physical properties and gas barrier properties.

In the present invention, other ion surfactants can be suitably used. Furthermore, anion, cation, and zwitterionic surfactants can be used in the light of the interaction with the catalyst.

Among them, the polyoxyalkylene, which is a water-soluble organic matter in liquid form and has moderate compatibility (or proper incompatibility) to the mercapto group-containing compound (E), is preferable, and, in particular, an ethylene glycol polymer can be preferably used.

The ethylene glycol polymers are commercially available widely ranging from a dimmer (diethylene glycol) to various molecular weights of polyethylene glycols. The compatibility, viscosity, and molecular size thereof can be properly selected and then suitably used. In the present invention, especially, diethylene glycol having a molecular weight of about 100 to polyethylene glycol having an average molecular weight of about 600 are more preferably used. Furthermore, tetraethylene glycol or polyethylene glycol having a molecular weight of around 200 can be especially preferably used.

The particle size and interparticle gap size are determined by the compatibility to the mercapto group-containing compound (E), the balance in compatibility to all the raw materials for membrane formation, including the solvents and additives, and the molecular weight and mixed amount of the polarity control agent (F). In the case of the present invention, there is a correlation between the average molecular weight of the polarity control agent (F) and interparticle gap size. Use of polyethylene glycol with a molecular weight of more than 600 results in formation of large interparticle gaps, thus degrading the gas barrier or physical properties and making the membrane brittle. On the other hand, the molecular weight of less than 100 results in small interparticle gap size and makes the membrane extremely dense, thus preventing formation of enough interparticle gaps.

Generally, the polarity control agent (F) is added at 3 to 150 parts by weight with respect to 100 parts by weight of the mercapto group-contained compound (E), which is difficult to arbitrarily say because the amount of polarity control agent (F) to be added depends on the type and molecular weight of the polarity control agent (F) or the structure of the membrane. When the amount of polarity control agent (F) is less than 3 parts by weight, the effect thereof on controlling the particle size and interparticle gap size is rarely seen. The amount of polarity control agent (F) more than 150 parts by weight results in extremely large interparticle gaps, so it is more likely to make the membrane brittle or make gas permeation conspicuous.

As described above, by using the polarity control agent (F), the proton conducting membrane of the present invention can be designed and fabricated to order the interparticle gaps, that is, the structure of the proton conducting paths, so a membrane having a good balance of various membrane physical properties such as the fuel gas permeation and membrane strength. This is a point greatly different from a membrane in which the proton conducting path is uniquely determined by the molecular structure thereof like the conventional sulfonated fluorine resin membrane.

Moreover, the proton conducting path controlled in such a manner does not deform even in a high temperature and high humidity environment, and the fuel cell can be therefore stably operated even at high temperature.

(iii) Mixing method

In the case of preparing these mixtures, a solvent may be used. The solvents for use just needs to be capable of uniformly mixing the respective materials with one another, and no particular limitations are imposed thereon. In general, water; alcohol solvents such as methanol, ethanol, 1-propanol, 2-propanol, and t-buthanol; ether solvents such as tetrahydrofuran, 1,4-dioxane; and the like can be suitably used.

Although the percentage of the solvent is not particularly limited, usually, the solid content concentration of about 90 to 10 wt% can be preferably used.

Furthermore, a catalyst (G) may be simultaneously mixed in this step, which is later described.

Moreover, in addition to water added as the solvent, water necessary for hydrolysis may be added. Usually, water is added in an equimolar amount of water to the hydrolytic silyl groups. In order to accelerate the reaction, more water may be added, or to inhibit the reaction, a smaller amount of water may be added.

The mixture may be performed by publicly known methods such as stirring or vibration, and the method thereof is not particularly limited as long as enough mixture can be performed.

Furthermore, in the first step, it is possible to add other optional components such as a reinforcing agent, a softening agent, a dispersant, an accelerant, a stabilizer, a colorant, an antioxidant, and an inorganic or organic filler within a range not impairing the object of the present invention.

- Second step.

In the second step, a polymerizable composition obtained by mixing the silicon-oxygen bonding structure (A), the silane compound ($\alpha$) and the acid group-containing compound ($\beta$) into the mixture obtained in the first step is prepared. The silane compound ($\alpha$) and the acid group-containing compound ($\beta$) are used while being appropriately adjusted, whereby the polymerizable composition can impact the softness and the high polar solvent resistance to the proton conducting membrane in comparison with the case of fabricating the membrane by using only the mixture obtained in the first step.

As for the silicon-oxygen bonding structure (A), the above-mentioned compounds can be used. Among them, the tetramethoxysilane and the tetraethoxysilane are universal articles, and are easily available in a large amount at a low price, and accordingly, can be preferably used. As the silane compound ($\alpha$), the above-mentioned compounds can be used. Among them, 3-(trimethoxysilyl)propyl methacrylate (Tokyo Chemical Industry Co., Ltd.) can be preferably

used. As the acid group-containing compound (β), the above-mentioned compounds can be used. Among them, 2-acrylamide-2-methylpropane sulfonic acid (AMPS) (Wako Pure Chemical Industries, Co., Ltd.) can be preferably used.

In the second step, it is preferable to add the cross-linking agent (C). As the cross-linking agent (C), the above-mentioned compounds can be used. Among them, the trimethylolpropane triacrylate, the neopentyl glycol diacrylate and the like can be preferably used.

Furthermore, in the second step, an arbitrary component such as a compatibilizing agent that is sodium dodecyl sulfate and the like, a photopolymerization initiator, and a thermal polymerization initiator can be added within the range where the object of the present invention is not damaged.

At the time of preparing the polymerizable composition, it is preferable to design the molecular structure and reaction conditions among the cross-liked molecules and to adjust the respective components so that a reaction rate of the polymerizable unsaturated double bond in the silane compound (α) can become 30% or more, more preferably 50% or more, and that a reaction rate of the polymerizable unsaturated double bond in the acid group-containing compound (β) can become 30% or more, more preferably 50% or more. When the reaction rate of the polymerizable unsaturated double bond in the silane compound (α) and acid group-containing compound (β) was less than 30%, the methanol cross over (MCO) performance was degraded, and the fuel cell had a tendency not to provide enough power generation performance in a high concentration methanol environment.

-Third step-

In the third step, the polymerizable composition obtained in the second step is formed (deposited) into a membrane shape.

In order to form the polymerizable composition, which is obtained in the second step, into the membrane shape, publicly known methods such as casting, coating, cast molding can be used. A method of forming the polymerizable composition into the membrane shape is not particularly limited as long as a uniform membrane can be obtained. A thickness of the membrane is not particularly limited; however, the membrane can be formed so as to have an arbitrary thickness from 10 μ m to 1mm. A proton conducting membrane for the fuel cell is appropriately decided based on the proton conductivity, the fuel barrier property and the mechanical strength of the membrane, and usually, a membrane that has a thickness ranging from 20 to 300 μ m can be preferably used. Accordingly, the proton conducting membrane of the present invention is also fabricated so that the membrane thickness thereof can conform to the above-described thickness.

Moreover, in the case of performing this deposition step, a support body or a reinforcement material, which is such as fiber, a mat, and a fibril, may be added, or the polymerizable composition may be impregnated into these support bodies. Such a support body or a reinforcement material can be used after being appropriately selected from a glass material, a silicone resin material, a fluorocarbon resin material, a cyclic polyolefin material, an ultrahigh molecular weight polyolefin material and the like in consideration of the heat and acid resistance.

As an impregnation method, a publicly known method such as a dip method, a potting method, a roll press method and a vacuum press method can be used without limitations, and moreover, the polymerizable composition may be heated, pressurized, and so on.

In the present invention, in order to reinforce the proton conducting membrane, multifariously, it is preferred that a polymer material made of fluorocarbon resin, polyethylene, and polyimide is impregnated with the polymerizable composition. For the polymer material made of fluorocarbon resin, polyethylene, and polyimide, a porous material having a thickness of 20 to 100 μ m, a pore diameter of 0.05 to 2.0 μ m, and a porosity of 60% or more is preferably used. The porous material is preferably subjected to hydrophilic treatment. For the fluorocarbon resin, polytetrafluoroethylene can be suitably used.

Furthermore, in the third process, in order to realize an intended distribution of the number of silicon atoms, the mixture of the polymerizable composition immersed into the polymer material is preferably processed with a centrifuge or the like in such a manner that a proper centrifugal force acts in a proper direction before final curing. The proton conducting membrane formed by this method can be produced so the number of moles of silicon atoms existing in the surface of the membrane as to be different from that existing in the rear surface of the membrane, so a concentration gradient proton conducting membrane can be obtained. As a result, the various properties such as methanol permeability of the membrane can be controlled to preferable values.

In the proton conducting membrane according to the present invention, if the methanol concentration is higher than 30 vol%, the electrolyte on the anode side is more likely to swell. To maintain the shape thereof, it is necessary to locate silicon atoms more in the anode side than that in the cathode side. More preferably, the number of silicon atoms existing in the anode side is 1.3 times or more of the number of silicon atoms existing in the cathode side. When the ratio thereof is less than 1.3, the effect of the existence of silicon atoms is rarely seen. On the other hand, when the methanol concentration is 30 vol% or less, in order to implement good discharge of generated water on the cathode side, the number of silicon atoms in the cathode side needs to be more than that in the anode side. More preferably,

the number of silicon atoms existing in the cathode side is 1.3 times or more of the number of silicon atoms existing in the anode side. If the ratio thereof is less than 1.3, the effect of the existence of silicon atoms is rarely seen. The number of moles of silicon atoms existing in the surface of the proton conducting membrane can be evaluated by measuring the concentration of elements using X-ray photoelectron spectroscopy (ESCA) and elemental and quantitative analyses using energy dispersive X-ray spectroscopy (EDX) or fluorescent X rays.

- Fourth step -

In the fourth step, the hydrolyzable silyl group contained in the membrane-like matter deposited in the third step is hydrolyzed and condensed, and/or the silanol group contained therein is condensed, whereby a membrane that contains, as a constituent element, the continuum of the particles, which is composed of the silicon-oxygen cross-linked structure, is formed.

The proton conducting membrane in the present invention is characterized in forming the cross-linked structure by the hydrolysis and condensation of an alkoxy silyl group and the like, stably exerting the proton conductivity even at high temperature, and also hardly causing a shape change and the like. Such creation of the Si-O-Si bond by the hydrolysis and condensation of the alkoxy silyl group and the like is well known as a sol-gel reaction.

In the sol-gel reaction, it is common to use a catalyst in order to accelerate and control the reaction. In usual, acid or base is used as the catalyst.

(iv) Catalyst (G)

The catalyst (G) for use in the manufacturing method of the proton conducting membrane of the present invention may be either the acid or the base.

In the case of using the acid catalyst, Bronsted acid such as hydrochloric acid, sulfuric acid, phosphoric acid and acetic acid is used. A type, concentration and the like of the acid are not particularly limited, and the acid just needs to be an available one. Among them, acetic acid can be suitably used because comparatively little acid remains after the reaction. In the case of hydrochloric acid, although the concentration thereof and the like are not particularly limited, 0.01 to 12N hydrochloric acid is usually used.

Generally, in case of using an acid, it is known that reaction proceeds uniformly between Si molecules due to the competition of the hydrolysis and the condensation to be a straight chain cross-linked structure with a few branches.

On the other hand, in case of using a base as the catalyst, the hydrolysis occurs at once, once one of Si molecules is hydrolyzed, the reaction progresses at the hydrolyzed molecule in a concentrated manner, thus resulting in a tree-like structure with many branches. In the present invention, it is possible to employ each of the above methods in view of the membrane physical properties. To emphasize the feature of forming particles and a continuum thereof, the basic catalyst is preferably used, in this case, the acid group-containing molecules ($\beta$) are preferable to have made salts.

As the basic catalyst, an aqueous solution of sodium hydroxide, potassium hydroxide, ammonium and the like can be used. Among them, ammonium, which does not cause residual salt, can be suitably used. Furthermore, in view of compatibility with the mercapto group-containing compound (E) and the like, organic amines can be preferably used.

Although the organic amines can be used without any special limitation, usually, organic amines with a boiling point of 50°C or more are preferably used. Examples of easily available organic amines having such a boiling point are triethylamine, dipropylamine, isobutylamine, diethylamine, diethylethanolamine, triethanolamine, pyridine, piperazine, or tetramethylammoniumhydroxide, all of which can be suitably used.

Moreover, as the condensation catalyst, fluoride such as potassium fluoride, ammonium fluoride, tetramethylammonium fluoride and tetraethylammonium fluoride may be used.

The amounts of the catalysts can be arbitrarily set and are properly determined in view of the reaction rate, compatibility with the raw materials of the membrane, and the like.

The step of introducing the catalysts may be performed at any timing from the first step to the fourth step. The simplest method is a method of introducing the catalyst at the time of preparing the mixture in the first step; however, in this case, it is necessary to consider the pot life and the setting time in the deposition as the third step.

(v) Condensation reaction

It is possible to perform the condensation reaction for the alkoxy silyl group and the like even at room temperature; however, heating should be performed in order to shorten a reaction time and to perform more efficient curing. A publicly known method just needs to be used for the heating, and heating by an oven, pressurization/heating by an autoclave, far infrared ray heating, electromagnetic induction heating, microwave heating and the like can be used. The heating can be performed at an arbitrary temperature from the room temperature to 300°C, and preferably is performed at 100

to 250°C. At this time, the heating may be performed under reduced pressure or under inert gas such as nitrogen and argon.

Moreover, for the heating, a method of avoiding a sudden environment change may be adopted. For example, in the method, the temperature is gradually raised to a high temperature after curing the above-descried subjects at the room temperature for a certain time.

Moreover, the heating may be performed under vapor in order to supply water required for the hydrolysis, or may be performed under solvent vapor in order to prevent sudden drying of the membrane.

According to needs, an unreacted matter and a cured catalyst may be removed by water rinsing from the membrane already subjected to the fourth step, and the membrane may be further subjected to ion exchange by sulfuric acid and the like.

Preferably, water used in washing does not include metal ions, like distilled water and ion-exchanged water. In water washing, heating may be conducted, and pressure or vibration may be applied for efficient water washing. Furthermore, to promote permeation of water into the membrane, a mixed solvent including methanol, ethanol, n-propanol, i-propanol, acetone, tetrahydrofran, or the like added to water may be used.

To protonate heteroatoms in the obtained membrane, the membrane may be brought into contact with a strong acid such as hydrochloric acid or sulfuric acid. In this case, the protonation conditions such as the acid concentration, immersion time, immersion temperature are properly determined by the content concentration of the sulfonic acid groups in the membrane, the porosity of the membrane, the affinity with the acid, and the like. As a typical example, the method that the membrane is immersed in 1N sulfuric acid at 25°C for 5 min is enumerated. Moreover, an another method is preferably used, which coats an acid such as polyacrylic acid, polytungstic acid, polysulfonic acid, the hydroxyl group-containing structure (P), or the acid group-containing structure (H) on the surface of the membrane and fixes the same on the surface of the membrane as the membrane-electrode junction layer.

- Fifth step -

In the manufacturing method of the proton conducting membrane of the present invention, the fifth step is a step of oxidizing the mercapto group in the membrane into the sulfonic acid group, and introducing the sulfonic acid group into the surfaces of the particles.

As previously described, prior to the oxidation, the membrane may be washed with water. Furthermore, in the case of using an organic amine as the catalyst, prior to the oxidation, the membrane may be brought into contact with an acid such as hydrochloric acid and sulfuric acid to remove the catalyst.

As water for use in washing, water that does not contain metal ions, such as distilled water and ion-exchanged water, is preferable. In the water rinsing, heating may be performed, or the water rinsing may be made more efficient by applying a pressure and giving vibrations. Moreover, in order to promote permeation of the sulfonic acid group into the membrane, a mixed solvent obtained by adding methanol, ethanol, n-propanol, i-propanol, acetone, tetrahydrofran or the like to water may be used.

The mercapto group oxidation method for use in the present invention is not particularly limited, and a general oxidant can be used. Specifically, for example, as mentioned in Shin Jikken Kagaku Koza (Maruzen, 3rd Edition, Vol. 15, 1976), oxidants such as nitric acid, hydrogen peroxide, oxygen, organic peroxide (percarboxylic acid), bromine water, hypochlorite, hypobromite, potassium permanganate and chromic acid can be used.

Among them, the hydrogen peroxide and the organic peroxide (peracetic, perbenzoic acids), which are comparatively easily handled and have good oxidation yields, can be suitably used.

Furthermore, to protonate the sulfonic acid group obtained by the oxidation, the membrane may be brought into contact with strong acid such as hydrochloric acid or sulfuric acid. The protonation conditions including the acid concentration, immersion time, immersion temperature, and the like in this case are properly determined by the content concentration of the sulfonic acid groups in the membrane, the porosity of the membrane, the affinity with the acid, and the like. One of typical examples thereof is a method of immersing the membrane in 1N sulfuric acid at 50°C for 1 hour.

After the oxidation, the membrane may be washed with water to remove the oxidant in the membrane.

Moreover, the membrane may be subjected to an acid treatment with hydrochloric acid, sulfuric acid, or the like after the oxidation. It is expected that impurities and unnecessary metal ions in the membrane are washed off by the acid treatment. Preferably, after the acid treatment, water washing is further conducted.

The manufacturing method described above is just an example and can be, for example, a method of obtaining the proton conducting membrane without performing the oxidation step. To be specific, 3-(trihydroxysilyl)-1-propane sulfonic acid can be used instead of 3-mercaptopropyl trimethoxysilane. Moreover, there is another method suitably used, a method of fabricating a membrane-electrode assembly by applying a polyacid, such as polyacrylic acid, polytungstic acid, and polysulfonic acid to the surface of the membrane; fixing the same by a press; and hot pressing the same together with electrodes.

<Manufacturing Method of Electrode-Membrane Assembly and Polymer Electrolyte Fuel Cell>

The proton conducting membrane obtained by the above-mentioned method and a gas diffusion electrode are joined to each other by hot pressing, whereby providing a membrane-electrode assembly. Moreover, as a unit cell, the membrane-electrode assembly concerned, and a pair of separators which serve as passages of the fuel and the oxygen can be arranged on the outsides of the membrane-electrode assembly, and a plurality of the adjacent unit cells are coupled to one another, whereby a polymer electrolyte fuel cell can also be obtained.

EXAMPLES

Next, a description will be made bellow of example in order to describe the present invention more in detail; however, the present invention is not limited only to these examples. The various evaluations and measurements in the examples were performed by the following methods.

<Evaluation Method>

(1) Evaluation of Proton Conductivity

Each proton conducting membrane obtained by the manufacturing method of the present invention was set in a normal electrochemical cell (for example, the same one as described in FIG. 3 in Japanese Patent Laid-open Publication No. 2002-184427) and were brought into close contact with platinum plates. The platinum plates were connected to an electrochemical impedance analyzer (Solartron Analytical, 1260 Type) for impedance measurement in a frequency range of 0.1Hz to 100kHz. The proton conductivity of the ion conducting membrane was then evaluated.

In the above measurement, each sample was supported within an electrically-insulated airtight vessel, and the cell temperature was changed from the room temperature to 160°C by a temperature controller in a water-vapor atmosphere (95 to 100%RH). The proton conductivity was measured at each temperature.

(2) Evaluation of Methanol Permeability

Methanol cross over (hereinafter, referred to as MCO) was measured by the following method.

First, using two circular cells having circular windows with a diameter of 2 cm, the proton conducting membrane was sandwiched by the windows with rubber packing interposed therebetween. Pure methanol was put in one of the cells, and pure water was put in the other cell. The pure water and methanol were stirred by a stirrer at 25°C for 1 hour. The pure methanol and water sides were treated as the anode and cathode sides, respectively. Concentration X (wt%) of methanol permeated to the pure water side was measured by gas chromatography, and MCO was calculated by the following equation.

[Equation 1]

$$\underset{(\mu mol/cm/day)}{MCO} = \frac{V-X}{100-X} \times \frac{1000}{32.04} \times \frac{T}{10000} \times \frac{24}{H} \times \frac{1}{\pi R^2}$$

V: WEIGHT OF AQUA PURA (mg)
T : THICKNESS OF PROTON CONDUCTING MEMBRANE (μ m)
H : TEST TIME (hr)
R : RADIUS OF EVALUATION CELL WINDOW (cm)

(3) Evaluation of Shape Retention Stability

The proton conducting membrane was cut to a 10 cm square, which was then immersed in pure methanol and left at 25°C for 12 hours. Thereafter, the square membrane was heated at 60°C for 1 hour, cooled to 0°C, and then left for 24 hours. The square membrane was again heated to 25°C and then left for 12 hours. A cycle of these operations was repeated three times. Then, the proton conducting membrane was taken out from the pure methanol, just after liquid on the surface was removed, the size was measured, the size after immersing was divided by the size before immersing, minus 1, and multiplied by 100, the average values measured for four sides of the square was expressed

as a size swelling rate, which was used as an indicator of the evaluation of shape retention stability.

(4) Evaluation of Polar Solvent Resistance

The proton conducting membrane was cut to 5 cm squares, which were immersed in 100 mL of pure methanol filled in sample bottles and then left at 60°C. After 100 hours, the immersed proton conducting membranes were taken out. After drying, the amount of weight reduced by immersing was divided by the weight before immersing to calculate a rate of methanol weight loss. 1 minus the rate of methanol weight loss was then multiplied by 100. The obtained value was determined as a methanol resistance weight retention rate, which was indicated as an indicator of evaluation of impact resistance to the polar solvent.

(5) Evaluation of Nafion Electrode Adhesiveness

The proton conducting membrane was cut into 5 cm squares and sufficiently wetted and immersed with water, then, each piece of the proton conducting membrane was sandwiched with Nafion electrodes of 2.5 cm square and was pressed for 3 min under the conditions of 140°C and 1kN using a precision press machine, thus a membrane-electrode assembly was obtained.

One of electrodes was fixed by double-faced tape, and using a 90-degree peel tester, a side part of the electrolyte membrane with an area of 75 $mm^2$ was peeled off at a rate of 1 cm/sec and the ratio of the obtained adhesion strength between the electrode and membrane divided by the strength obtained for the Nafion membrane-Nafion electrode assembly under the same condition, was used as an indicator of Nafion electrode adhesiveness evaluation.

(6) Evaluation of Low Concentration Power Generation Performance

Each of the membrane-electrode assemblies was set into a single cell (JARI standard cell) for the fuel cell in accordance with a determined method. This cell was set into a fuel cell power generation evaluation apparatus (NF corporation, "As-510"). Then, the cell was operated under conditions where a cell temperature was 40°C, a concentration of methanol was 15 vol%, a flow rate thereof was 1 cc per minute, and a flow rate of the air was 100 cc per minute. Then, currents (I) and voltages (V) of the respective cells were measured, and the maximum outputs thereof were compared with one another.

As an evaluation criterion for comparing power generation performances of MEAs fabricated in the examples and the comparative examples, relative values of the maximum outputs thereof were evaluated with the maximum output of Comparative Example 3 being set to 1.

(7) Evaluation of High Concentration Power Generation Performance

Power generation performance at high concentration was evaluated in the same manner except that the concentration of methanol was 50 vol%.

(Example 1)

53.0 g of 3-mercaptopropyl trimethoxysilane (Shin-Etsu Chemical Co., Ltd., KBM-803), 131.2 g of tetraethoxysilane (Shin-Etsu Chemical Co., Ltd., KBE-04), and 26.5 g of methanol were measured in a flask and stirred at 0°C for 10 min. Next, mixture solution of 15.6 g of 0.01N hydrochloric acid and 20.8 g of methanol were added thereto; stirred at 0°C for 1 hour; heated to 40°C; and then further stirred for 2 hours. Subsequently, mixture solution of 0.114g of potassium fluoride (Wako Pure Chemical Industries, Co., Ltd.) and 29.7 g of methanol were added thereto; stirred at 40°C for 1 hour; heated to 80°C; and then further stirred for 2 hours. The mixture solution was cooled to 0°C and subjected to fractional distillation at 40°C in vacuum to derive alcohol. The obtained solution was cooled to 0°C; added with 200 mL of diethyl ether; stirred at 0°C for 10 min; and then filtrated using a membrane filter (Millipore corporation, omnipore membrane, pore diameter=0.2 μ m). The obtained filtrate was subjected to fractional distillation at 40°C in vacuum to remove diethyl ether, thus obtaining mercapto group-containing silane oligomer.

Into a mixture solution of 2.17 g of the mercapto group-containing silane oligomer, 0.81 g of triethoxyvinysilane (Shin-Etsu Chemical Co., Ltd., KBM-1003), 2.43 g of the tetraethoxysilane (Shin-Etsu Chemical Co., Ltd., KBE-04) and 0.86 g of tetramethoxysilane (Tokyo Chemical Industry Co., Ltd.), 0.15 g of water and 0.07 g of triethylamine (Wako Pure Chemical Industries, Co., Ltd.) were dropped. The obtained mixture solution was stirred at room temperature for 10 min, into which 14.1 g of a 30% aqueous solution of 2-acrylamide-2-methylpropane sulfonic acid (Ardrich Co., Ltd.) was dropped. The mixture solution was cooled to 0°C and stirred for 5 min. 0.1 g of a photopolymerization initiator (Light Chemical Industries, Co., Ltd., KR-02) and 0.1 g of azobisisobutyronitrile (Wako Pure Chemical Industries, Co., Ltd.) as

a thermal polymerization initiator were added thereto, thus obtaining the polymerizable composition.

A solution obtained by dissolving 1 g of the polymerizable composition to 10 mL of N,N-dimethylformamide was casted in the form of a Tefron (Registered Trademark) substrate, exposed to UV irradiation, and aged at room temperature for 80 hours. After being heated using a gear oven at 130°C for 24 hours for curing, the product was immersed in peracetic prepared by mixing 60 mL of acetic acid and 15 mL of 30% hydrogen peroxide solution and then heated at 50°C for 1 hour by a hot plate. The membrane thus obtained was taken out from the peracetic solution and immersed in water at 40°C for 1 hour to remove sufficiently the peracetic solution, then, a translucent proton conducting membrane was obtained.

(Example 2)

Into a mixture solution of 1.86 g of mercapto group-containing olygomer obtained in Example 1 and 2.26 g of bis(triethoxysilyl)octane (Gelest Inc.), 0.11 g of water and 0.05 g of the triethylamine (Wako Pure Chemical Industries, Co., Ltd.) were dropped. The obtained mixture solution was stirred at room temperature for 10 min, into which 12.5 g of a 30% aqueous solution of the 2-acrylamide-2-methylpropanesulfonic acid (Aldrich Co., Ltd.), 0.3 g of the 3-(trimethoxysilyl)propyl methacrylate (Tokyo Chemical Industry Co., Ltd.), 1 g of 10% aqueous solution of N,N'-methylenebisacrylamide (Wako Pure Chemical Industries, Co., Ltd.), and 0.1 g of neopentylglycol diacrylate (Tokyo Chemical Industry Co., Ltd.) were dropped. The mixture solution was cooled to 0°C and stirred for 5 min. Subsequently, 0.1 g of the photopolymerization initiator (Light Chemical Industries, Co., Ltd., KR-02) and 0.1 g of the azobisisobutyronitrile (Wako Pure Chemical Industries, Co., Ltd.) as a thermal polymerization initiator were added thereto, thus obtaining the polymerizable composition. Except forming the polymerizable composition in such a manner, the same steps of UV irradiation, ageing, firing, and oxidation as those of Example 1 were performed after the polymerizable composition was dissolved to obtain a N,N-dimethylformamide solution of the same, thus obtaining a translucent proton conducting film.

(Example 3)

Into a mixture solution of 1.86 g of mercapto group-containing silane olygomer obtained in Example 1, 0.62 g of triethoxyvinylsilane (Shin-Etsu Chemical Co., Ltd., KBE-1003) and 3.51 g of the tetraethoxysilane (Shin-Etsu Chemical Co., Ltd., KBE-04), 0.11 g of water and 0.05 g of the triethylamine (Wako Pure Chemical Industries, Co., Ltd.) were dropped. The obtained mixture solution was stirred at room temperature for 10 min, into which 12.5 g of a 30% aqueous solution of the 2-acrylamide-2-methylpropanesulfonic acid (Aldrich Co., Ltd.), 0.3 g of 1,4-divinylbenzene (Wako Pure Chemical Industries, Co., Ltd.), and 1 g of 10% aqueous solution of the N,N'-methylenebisacrylamide (Wako Pure Chemical Industries, Co., Ltd.), and 0.1 g of the neopentylglycol diacrylate (Tokyo Chemical Industries Co., Ltd.) were dropped. The mixture solution was cooled to 0°C and stirred for 5 min. Subsequently, 0.1 g of the photopolymerization initiator (Light Chemical Industries, Co., Ltd., KR-02) and 0.1 g of the azobisisobutyronitrile (Wako Pure Chemical Industries, Co., Ltd.) as a thermal polymerization initiator were added thereto, thus obtaining the polymerizable composition. Except forming the polymerizable composition in such a manner, the same steps of UV irradiation, ageing, firing, and oxidation were performed after the polymerizable composition was dissolved to obtain the N,N-dimethylformamide solution of the same, thus obtaining a translucent proton conducting membrane.

(Example 4)

3 g of the polymerizable composition obtained in Example 3 is impregnated into a polyethylene porous film (thickness: 20 to 60 $\mu$ m; porosity: 80 to 95%; average particle size: 0.5 to 1.0 $\mu$ m) over a fluorocarbon resin film. The fluorocarbon resin film was put on the impregnated membrane, and leveling was performed with an applicator for the impregnated membrane from above so that the film thickness was 50 $\mu$ m. The film was then peeled off, and the membrane was exposed to UV irradiation and then aged for 80 hours. Another fluorocarbon film was put over the membrane, which was then sandwiched by two glass plates with the fluorocarbon resin film interposed therebetween. The membrane was put into a glass vessel with 500 mL of water in such a state. Through the same steps except that the membrane was heated at 80°C for 24 hours using a gear oven to be cured and fired, a translucent proton conducting membrane was obtained.

Observation of the fracture cross section of the electrolyte membrane with a FE-SEM confirmed that the particles had an amorphous structure with a size of 50 to 80 nm within the electrolyte.

(Example 5)

The proton conducting membrane obtained in Example 4 was cut to a 5 cm square and was immersed for 30 min in a mixture solution of 0.1 g of 5% sulfuric acid (Wako Pure Chemical Industries, Co., Ltd.), 2 g of polystylenesulfonic

acid (Ardrich Co., Ltd.), 1 g of polyacrylic acid (Ardrich Co., Ltd.) and 1 g of polyvinyl pyrolidone (Ardrich Co., Ltd.). The obtained membrane was taken out from the mixture solution and immersed in water at 40°C for 10 min to be sufficiently washed, thus obtaining a translucent proton conducting membrane.

(Example 6)

Except that 0.25 g of sodium dodecyl sulfate (Wako Pure Chemical Industries, Co., Ltd.) was added when the polymerizable composition was obtained in Example 3, the same steps of UV irradiation, ageing, firing, and oxidation were performed after the polymerizable composition was impregnated into a polyethylene porous film (thickness: 20 to 60 μ m; porosity: 80 to 95%; average particle size: 0.5 to 1.0 μ m) on a fluorocarbon resin film, thus obtaining a translucent proton conducting membrane.

(Example 7)

3 g of the polymerizable composition obtained in Example 3 was impregnated into a polyethylene porous film (thickness: 20 to 60 μ m; porosity: 80 to 95%; average particle size: 0.5 to 1.0 μ m) on a fluorocarbon resin film. A fluorocarbon resin film is put over the impregnated membrane, and leveling is performed over the same with an applicator so that the film thickness was 50 μ m. The membrane was aged at room temperature for 24 hours with the fluorocarbon resin film remaining thereon and then placed and fixed in a centrifuge so that the centrifugal force was applied perpendicular to the membrane surface. The membrane was centrifuged at 120 rpm for 10 min. The inner and outer surfaces were set as the cathode and anode surfaces, respectively. The films were peeled off, and the membrane was exposed to UV irradiation and then aged at room temperature for 80 hours. Next, the membrane was covered with a new fluorocarbon film, sandwiched by two glass plates with the fluorocarbon film interposed therebetween, and then put into a glass vessel with 500 mL of water in this state. The membrane was heated at 80°C for 24 hours to be cured and fired. Except the above steps, the same oxidation step was performed to obtain a translucent proton conducting film.

Measurement of element concentrations by ESCA for the surface of the proton conducting membrane confirmed that the number of moles of silicon atoms existing in the inner surface was 1.3 times or more of that in the outer surface.

(Example 8)

A translucent proton conducting membrane was obtained through the same steps except that the proton conducting membrane obtained in Example 7 was treated with the inner and outer surfaces set to anode and cathode surfaces, respectively.

(Example 9)

The proton conducting membrane obtained in Example 4 was cut to a 5 cm square and was immersed for 10 min in a mixture solution of 0.1 g of 5% sulfuric acid (Wako Pure Chemical Industries, Co., Ltd.), 0.5 g of 18 wt% aqueous solution of the polystylenesulfonic acid (Ardrich Co., Ltd.), 1.1 g of polyphosphoric acid (Wako Pure Chemical Industries, Co., Ltd.), 0.5 g of polyvinyl alcohol (Wako Pure Chemical Industries, Co., Ltd.), and 0.4 g of 1,2,3-propanetryol (Wako Pure Chemical Industries, Co., Ltd). The obtained membrane was taken out from the mixture solution, covered with a new fluorocarbon film to be sandwiched therebetween, and subjected to hot pressing at 110°C with 0.5 kN, thus obtaining a translucent proton conducting membrane.

(Example 10)

A mixture solution of 0.62 g of the triethoxyvinylsilane (Shin-Etsu Chemical Co., Ltd., KBE-1003) and 3.51 g of the tetraethoxysilane (Shin-Etsu Chemical Co., Ltd., KBE-04) was stirred at room temperature for 10 min. 2.63 g of 2-acrylamide-2-methylpropaneslufonic acid (Aldrich Co., Ltd.), 0.3 g of the 1,4-divinylbenzene (Wako Pure Chemical Industries, Co., Ltd.), and 1 g of 10% aqueous solution of the N.N'-methylenebisacrylamide (Wako Pure Chemical Industries, Co., Ltd.), and 0.1 g of the neopentylglycol diacrylate (Tokyo Chemical Industries Co., Ltd.), and 2.57 g of water were dropped thereto. The mixture solution was cooled to 0°C and stirred for 5 min. 0.1 g of the photopolymerization initiator (Light Chemical Industries, Co., Ltd., KR-02) and 0.1 g of the azobisisobutyronitrile (Wako Pure Chemical Industries, Co., Ltd.) as a thermal polymerization initiator were added thereto, thus obtaining the polymerizable composition.

3 g of the polymerizable composition was impregnated into a polyethylene porous membrane (thickness: 20 to 60 μ m; porosity: 80 to 95%; average particle size: 0.5 to 1.0 μ m) on a fluorocarbon resin film. The fluorocarbon resin film was put over the impregnated membrane, and leveling was performed over the same with an applicator so that the

film thickness was 50 μm. The film was peeled off, and the membrane was exposed to UV irradiation and then aged at room temperature for 80 hours. Next, the membrane was covered with a new fluorocarbon film, sandwiched by two glass plates with the fluorocarbon film interposed therebetween, and then put into a glass vessel with 500 mL of water in this state. The membrane was heated using a gear oven at 80°C for 24 hours to be cured and fired to obtain a membrane.

Subsequently, the same steps as those of Example 9 were performed to obtain a translucent proton conducting membrane.

(Example 11)

A mixture solution of 0.54 g of the triethoxyvinylsilane (Shin-Etsu Chemical Co., Ltd., KBE-1003) and 1.09 g of the tetraethoxysilane (Shin-Etsu Chemical Co., Ltd., KBE-04) was stirred at room temperature for 10 min. Next, 1.87 g of the 2-acrylamide-2-methylpropaneslufonic acid (Aldrich Co., Ltd.), 0.6 g of the 1,4-divinylbenzene (Wako Pure Chemical Industries, Co., Ltd.), 5 g of 10% aqueous solution of the N,N'-methylenebisacrylamide (Wako Pure Chemical Industries, Co., Ltd.), 0.6 g of the neopentylglycol diacrylate (Tokyo Chemical Industries Co., Ltd.), and 1.74 g of water were dropped thereto. The mixture solution was cooled to 0°C and stirred for 5 min. Subsequently, 0.1 g of the photopolymerization initiator (Light Chemical Industries, Co., Ltd., KR-02) and 0.1 g of the azobisisobutyronitrile (Wako Pure Chemical Industries, Co., Ltd.) as a thermal polymerization initiator were added thereto, thus obtaining the polymerizable composition.

3 g of the polymerizable composition was impregnated into a polyethylene porous membrane (thickness: 20 to 60 μm; porosity: 80 to 95%; average particle size: 0.5 to 1.0 μ m) on a fluorocarbon resin film. The fluorocarbon resin film was put over the impregnated membrane, and leveling was performed over the same with an applicator so that the film thickness was 50 μm. The film was peeled off, and the membrane was exposed to UV irradiation and then aged at room temperature for 80 hours. Next, the membrane was covered with a new fluorocarbon film, sandwiched by two glass plates with the fluorocarbon film interposed therebetween, and then put into a glass vessel with 500 mL of water in this state. The membrane was heated using a gear oven at 80°C for 24 hours to be cured and fired to obtain a membrane.

The same steps as those of Example 9 were performed to obtain a translucent proton conducting membrane.

Observation of the fracture cross section of the electrolyte membrane with a FE-SEM confirmed that inner part of the electrolyte had an amorphous particle structure with a particle size of 50 to 80 nm.

(Comparative Example 1)

Into a mixture solution of 3.86 g of mercapto group-containing silane oligomer obtained in Example 1 and 1.51 g of the tetraethoxysilane (Shin-Etsu Chemical Co., Ltd., KBE-04), 0.08 g of water and 0.03 g of the triethylamine (Wako Pure Chemical Industries, Co., Ltd.) were dropped. The obtained mixture solution was stirred at room temperature for 10 min, into which 0.3 g of trimethylolpropane triacrylate (Tokyo Chemical Industries Co., Ltd.), 1 g of 10% aqueous solution of the N.N'-methylenebisacrylamide (Wako Pure Chemical Industries, Co., Ltd.), and 0.2 g of vinyl methacrylate (Tokyo Chemical Industries Co., Ltd.) were then dropped. The mixture solution was cooled to 0°C and stirred for 5 min. Subsequently, 0.1 g of the photopolymerization initiator (Light Chemical Industries, Co., Ltd., KR-02) and 0.1 g of the azobisisobutyronitrile (Wako Pure Chemical Industries, Co., Ltd.) as a thermal polymerization initiator were added thereto, thus obtaining the polymerizable composition. Except obtaining the polymerizable composition in such a manner, the same steps are performed after the polymerizable composition was impregnated into a polyethylene porous film on a fluorocarbon resin film to obtain a translucent proton conducting membrane.

(Comparative Example 2)

Into a mixture solution of 1.26 g of mercapto group-containing silane olygomer obtained in Example 1 and 0.42 g of the tetraethoxysilane (Shin-Etsu Chemical Co., Ltd., KBE-04), 0.05 g of water and 0.02 g of the triethylamine (Wako Pure Chemical Industries, Co., Ltd.) were dropped. The obtained mixture solution was stirred at room temperature for 10 min, into which 0.3 g of trimethylpropane triacrylate (Tokyo Chemical Industries Co., Ltd.), 1 g of 10% aqueous solution of the N,N'-methylenebisacrylamide (Wako Pure Chemical Industries, Co., Ltd.), and 0.1 g of the vinyl methacrylate (Tokyo Chemical Industries Co., Ltd.) were dropped. The mixture solution was cooled to 0°C and stirred for 5 min. Subsequently, 0.05 g of the photopolymerization initiator (Light Chemical Industries, Co., Ltd., KR-02) and 0.07 g of the azobisisobutyronitrile (Wako Pure Chemical Industries, Co., Ltd.) as a thermal polymerization initiator were added thereto. The obtained mixture solution was stirred at room temperature for 30 minutes. Furthermore, 15 wt% aqueous solution of poly(2-acrylamide-2-methylpropanesulfonic acid) was diluted and prepared to 10 wt%. 10 g of this diluted 10 wt% aqueous solution of poly(2-acrylamide-2-methylpropanesulfonic acid) was added to the mixture solution and then stirred at room temperature for 10 minutes, thus obtaining a polymerizable composition. Except obtaining the polymerizable composition in such a manner, the same steps are performed after the polymerizable composition was impregnated

into a polyethylene porous film on a fluorocarbon resin film to obtain a translucent proton conducting membrane.

(Comparative Example 3)

The proton conducting membrane was composed of commercially available Nafion 117 (Du Pont).

<Results>

The obtained results were shown in Table 1 below.

[Table 1]

| | PROTON CONDUCTIVTY ($10^{-3}$ S/cm) | MCO (μ mol / cm /day) | SHAPE RETENTION STABILITY (%) | POLAR SOLVENT RESISTANCE (%) | ELECTRODE ADHESIVESS | LOW CONCENTRATION POWER GENERATION PERFORMANCE | HIGH CONCENTRATION POWER GENERATION PERFORMANCE |
|---|---|---|---|---|---|---|---|
| EXAMPLE 1 | 2.0 | 59 | 6.7 | 95 | 1 | 1.3 | 15 |
| EXAMPLE 2 | 1.9 | 60 | 6.3 | 96 | 1 | 1.2 | 1.4 |
| EXAMPLE 3 | 1.9 | 45 | 4.8 | 97 | 1 | 12 | 1.4 |
| EXAMPLE 4 | 1.7 | 35 | 2.5 | 96 | 0.9 | 1 | 1.3 |
| EXAMPLE 5 | 20 | 40 | 2.8 | 97 | 0.9 | 1.3 | 1.5 |
| EXAMPLE 6 | 1.6 | 38 | 2.4 | 95 | 0.9 | 1 | 1.3 |
| EXAMPLE 7 | 1.5 | 29 | 2.6 | 96 | 0.8 | 1 | 1.5 |
| EXAMPLE 8 | 1.5 | 29 | 2.6 | 96 | 0.9 | 1.3 | 1.3 |
| EXAMPLE 9 | 2.3 | 33 | 2.3 | 90 | 1 | 1.4 | 1.6 |
| EXAMPLE 10 | 2.3 | 35 | 2.2 | 92 | 1 | 1.5 | 1.6 |
| EXAMPLE 11 | 2.4 | 38 | 2.5 | 97 | 1 | 15 | 1.8 |
| COMPARATIVE EXAMPLE 1 | 1.3 | 26 | 7.3 | 94 | 0.4 | 0.8 | 1.1 |
| COMPARATIVE EXAMPLE 2 | 1.8 | 140 | 4.5 | 85 | 0.8 | 1 | 12 |
| COMPARATIVE EXAMPLE 3 | 1.6 | 5200 | 65 | 70 | 1 | 1 | 1 |

As shown in Table 1, it was found that the proton conducting membranes obtained in Examples 1 to 11 had proton conductivities which were higher than that of Comparative Example 1 and equal to or higher than those of Comparative Examples 2 to 3.

The proton conducting membrane obtained in Examples 1 to 11 showed very low methanol cross over while the proton conducting membranes of Comparative Examples 2 and 3 showed higher methanol cross over than those in Example 1 to 11. Examples 1, 2, and 3 which were not reinforced by the polymer materials had much higher proton conductivities compared with those of Comparative Examples, especially Example 3 was found to provide high performances in both proton conductivity and resistance to methanol permeation. The high combined performances are considered to be originated from the covalent bond formed between the silicon-oxygen bonding structure and acid group-containing structure, and the cross-linked structures of the N,N'-methylenebisacrylamide and the divinylbenzene. Moreover, the proton conducting membranes obtained in Examples 4 to 11 were reinforced multifariously by the polymer material, and were found to be improved in MCO and impact resistance compared with Examples 1, 2, and 3.

The proton conducting membrane obtained in Example 5 showed proton conductivity equivalent to Examples 1, 2, and 3 which were not reinforced multifariously by polymer materials, and showed higher proton conductivity than Examples 4, 6, and 7. This is considered to be because protons were attached to unshared pairs of electrons of protonatable heteroatoms to form more efficient proton conducting paths.

Moreover, the proton conducting membrane obtained in Example 6 had nearly the same performances as the proton conducting membrane obtained in Example 4. It is thought that the compatibilizing agent (D) could be added.

In Example 7, the amount of Si on the anode side was more than that on the cathode side, thus, a swelling on the anode side electrolyte was prevented and the shape could be preserved, so a good performance was shown at high concentration power generation. On the contrary, in Example 8, the amount of Si on the anode side is less than that on the cathode side, thus the water generated on the cathode side was easily discharged, so a good performance was shown at low-concentration power generation.

Examples 9, 10, and 11 showed good proton conductivity and power generation performance compared to the other examples despite being reinforced by the polymer materials. This is considered to be because the membrane-electrode junction layer enabled efficient move of protons. Examples 9, 10, and 11 provided good adhesiveness with the electrode, so it was considered to be possible to optimize the junction properties with not only typical Nafion electrodes but also other various types of electrodes.

As described above, it was found that each of Examples 1 to 11 had a high proton conductivity and a good MCO together and showed high performances in impact resistance, polar solvent resistance, and electrode adhesiveness.

## Claims

1. A proton conducting membrane comprising:

   a silicon-oxygen bonding structure (A), containing a cross-linked structure formed by a silicon-oxygen bond, and an acid group-containing structure (B) covalently bonded to a silane compound and containing an acid group, which are coupled to each other by a silicon-oxygen bond,
   wherein the silicon-oxygen bonding structure (A) is obtained by hydrolysing and polycondensing alkoxysilanes;
   wherein the acid group-containing structure (B) includes a structure in which a silane compound ($\alpha$) having a silicon-oxygen bond and a polymerizable unsaturated double bond and an acid group-containing compound ($\beta$), which is selected from the group consisting of 2-acrylamide-2-methylpropane sulfonic acid, 2-(methacryloyloxy)ethylsulfonic acid, 3-sulfopropyl methacrylate, p-stilsulfonic acid, 4,4-diaminostilbenzene-2,2'-disulfonic acid and itaconic acid bis(3-sulfopropyl), are covalently bonded to each other;
   wherein atoms constituting the acid group and the silicon atom bonded to the silicon-oxygen bonding structure (A) are bonded through a bond of at least four or more consecutive carbon atoms in the acid group-containing structure (B).

2. The proton conducting membrane according to claim 1, wherein the acid group-containing compound ($\beta$) comprises three or more protonatable heteroatoms and is any of acrylamide, acrylate, and methacrylate containing a methylene group.

3. The proton conducting membrane according to claim 1, further comprising a cross-linking agent (C) that has, in a single molecule, two or more functional groups capable of being bonded to the silicon-oxygen bonding structure (A), the silane compound ($\alpha$), or the acid group-containing compound ($\beta$).

4. The proton conducting membrane according to claim 3, wherein a total weight of the silicon-oxygen bonding structure

(A) and the silane compound ($\alpha$) is 40 to 120 wt% with respect to the cross-linking agent (C) having at least one polimerizable unsaturated double bond within its bonds concerned.

5. The proton conducting membrane according to claim 3, wherein a weight of the silane compound ($\alpha$) is 10 to 70 wt% with respect to the cross-linking agent (C) having at least one polimerizable unsaturated double bond within its bonds concerned.

6. The proton conducting membrane according to claim 3, wherein a compound composed of the silicon-oxygen bonding structure (A), the acid group-containing compound (B) and the cross-linking agent (C), has a granular structure which is a continuum including particles bonded to each other.

7. The proton conducting membrane according to claim 6, wherein the particles have an average particle size of 3 to 200 nm.

8. The proton conducting membrane according to claim 3, wherein the silicon-oxygen bonding structure (A), the acid group-containing structure (B), and the cross-linking agent (C) having at least one Polymerizable unsaturated double bond within its bonds concerned, are covalently bonded to each other.

9. The proton conducting membrane according to claim 1, wherein the silicon-oxygen bonding structure (A) is composed of one or more selected from the group consisting of 1,2-bis(triethoxysilyl) ethane; 2,6-bis(trimethoxysilyl)hexane; 1,9-bis(triethoxysilyl)nonane; 1,8-bis(triethoxysilyl)ociane; 1,8-bis(diethoxymethylsilyl)octane; 1,4-bis(trimethoxysilylethyl)benzene; 1,4-bis(triethoxysilylethyl)benzene; 1,8-bis(methyldiethoxysilyl)octane; tetramethoxysilane, tetraethoxysilane, tetraisopropoxysilane, tetrabutoxysilane, methyltrimethoxysilane, phenyltrimethoxysilane, phenyltriethoxysilane, dimethyldimethoxysilane, phenylmethyldimethoxysilane, ethyltrimethoxysilane, n-propyltrimethoxysilane, i-propyltrimethoxy silane and n-butyltrimethoxysilane.

10. The proton conducting membrane according to claim 1, wherein the silane compound ($\alpha$) is selected from the group consisting of 3-(trimethoxysilyl)propyl acrylate, 3-(methyldimethoxysilyl)propyl acrylate, 3-(triethoxysilyl)propyl acrylate, 3-(methyldiethoxysilyl)propyl acrylate, trimethoxyvinylsilane, triethoxyvinylsilane, 3-(trimethoxysilyl)propyl methacrylate, 3-(methyldimethoxysilyl)propyl methacrylate, 3-(triethoxysilyl)propyl methacrylate, 3-(methyldiethoxysilyl)propyl methacrylate, p-styryltrimethoxysilane and p-styryltriethoxysilane.

11. A proton conducting membrane having a junction layer, comprising:

the proton conducting membrane according to claim 1; and
a membrane-electrode junction layer that is provided on one of surface or both surfaces of the proton conducting membrane
wherein the membrane-electrode junction layer concerned includes a hydroxyl group-containing structure (P) including as constituent elements: a compound (a) having a hydroxyalkoxy group; and a polymerizable inorganic acid component including phosphor and/or inorganic acid polymer (b).

12. The proton conducting membrane according to claim 1, wherein the proton conducting membrane is reinforced multifariously by a polymer material (Q).

13. A membrane-electrode assembly comprising:

the proton conducting membrane according to claim 1; and
a fuel electrode and an oxygen electrode being arranged on the proton conducting membrane.

14. A polymer electrolyte fuel cell comprising the membrane-electrode assembly according to claim 13.

15. A polymer electrolyte fuel cell comprising:

a unit cell made of the membrane -electrode assembly according to claim 13 and
a pair of separators which serve as passages of fuel and/or oxygen, being arranged on outsides of the unit cell, wherein a plurality of the adjacent unit cells are coupled to one another.

## Patentansprüche

1. Protonen-leitende Membran, umfassend:

eine Silizium-Sauerstoff-Bindungsstruktur (A), die eine aus einer Silizium-Sauerstoffbindung gebildete vernetzte Struktur enthält, und eine Säuregruppen enthaltende Struktur (B), die kovalent an eine Silanverbindung gebunden ist und eine Säuregruppe enthält, die miteinander über eine Silizium-Sauerstoffbindung verknüpft sind, worin die Silizium-Sauerstoff-Bindungsstruktur (A) durch Hydrolysieren und Polykondensieren von Alkoxysilanen erhalten wird;

worin die Säuregruppen enthaltende Struktur (B) eine Struktur beinhaltet, in der eine Silanverbindung ($\alpha$), die eine Silizium-Sauerstoffbindung und eine polymerisierbare ungesättigte Doppelbindung aufweist, und eine Säuregruppen enthaltende Verbindung ($\beta$), die aus der Gruppe bestehend aus 2-Acrylamid-2-methylpropansulfonsäure, 2-(Methacryloxy)ethylsulfonsäure, 3-Sulfopropylmethacrylat, p-Stilsulfonsäure, 4,4-Diaminostilbenzol-2,2'-disulfonsäure und Itakonsäurebis(3-sulfopropyl) ausgewählt ist, miteinander kovalent verbunden sind;

worin Atome, die die Säuregruppe aufbauen und das zur Silizium-Sauerstoff-Bindungsstruktur (A) gebundene Siliziumatom über eine Bindung von mindestens vier oder mehr aufeinanderfolgende Kohlenstoffatome in der Säuregruppen enthaltenden Struktur (B) verbunden sind.

2. Protonen-leitende Membran gemäß Anspruch 1, worin die Säuregruppen enthaltende Verbindung ($\beta$) drei oder mehr protonierbare Heteroatome umfasst und eines aus Acrylamid, Acrylat oder Methacrylat, enthaltend eine Methylengruppe, ist.

3. Protonen-leitende Membran gemäß Anspruch 1, die weiterhin ein Verknüpfungsmittel (C) umfasst, das in einem einzelnen Molekül zwei oder mehr funktionelle Gruppen aufweist, die in der Lage sind, an die Silizium-Sauerstoff-Bindungsstruktur (A), die Siliziumverbindung ($\alpha$) oder die Säuregruppen enthaltende Verbindung ($\beta$) gebunden zu werden.

4. Protonen-leitende Membran gemäß Anspruch 3, worin ein Gesamtgewicht der Silizium-Sauerstoff-Bindungsstruktur (A) und der Silanverbindung ($\alpha$) 40 bis 120 Gew.% in Bezug auf das Verknüpfungsmittel (C), das mindestens eine polymerisierbare ungesättigte Doppelbindung innerhalb seiner betroffenen Bindungen aufweist, ist.

5. Protonen-leitende Membran gemäß Anspruch 3, worin ein Gewicht der Silanverbindung ($\alpha$) 10 bis 70 Gew.% in Bezug auf das Verknüpfungsmittel (C), das mindestens eine polymerisierbare ungesättigte Doppelbindung innerhalb seiner betroffenen Bindungen aufweist, ist.

6. Protonen-leitende Membran gemäß Anspruch 3, worin die aus der Silizium-Sauerstoff-Bindungsstruktur (A), das Säuregruppen enthaltenden Verbindung (B) und dem Verknüpfungsmittel (C) aufgebaute Verbindung eine granulare Struktur hat, die ein Kontinuum ist, das miteinander verbundene Partikel einschließt.

7. Protonen-leitende Membran gemäß Anspruch 6, worin die Partikel eine mittlere Teilchengröße von 3 bis 200 nm haben.

8. Protonen-leitende Membran gemäß Anspruch 3, worin die Silizium-Sauerstoff-Bindungsstruktur (A), die Säuregruppen enthaltende Struktur (B) und das Verknüpfungsmittel (C), das mindestens eine polymerisierbare ungesättigte Doppelbindung innerhalb seiner betroffenen Bindungen aufweist, kovalent miteinander verbunden sind.

9. Protonen-leitende Membran gemäß Anspruch 1, worin die Silizium-Sauerstoff-Bindungsstruktur (A) aus ein oder mehreren ausgewählt aus der Gruppe bestehend aus 1,2-Bis(triethoxysilyl)ethan; 1,6-Bis(trimethoxysilyl)hexan; 1,9-Bis(triethoxysilyl)nonan; 1,8-Bis(triethoxysilyl)oktan; 1,8-Bis(diethoxymethylsilyl)oktan; 1,4-Bis(trimethoxysilylethyl)benzol; 1,4-Bis(triethoxysilylethyl)benzol; 1,8-Bis(methyldiethoxysilyl)oktan; Tetramethoxysilan, Tetraethoxysilan, Tetraisopropoxysilan, Tetrabutoxysilan, Methyltrimethoxysilan, Phenyltrimethoxysilan, Phenyltriethoxysilan, Dimethyldimethoxysilan, Phenylmethyldimethoxysilan, Ethyltrimethoxysilan, n-Propyltrimethoxysilan, i-Propyltrimethoxysilan und n-Butyltrimethoxysilan aufgebaut ist.

10. Protonen-leitende Membran gemäß Anspruch 1, worin die Silanverbindung ($\alpha$) aus der Gruppe bestehend aus 3-(Trimethoxysilyl)propylacrylat, 3-(Methyldimethoxysilyl)propylacrylat, 3-(Triethoxysilyl)propylacrylat, 3-(Methyldiethoxysilyl)propylacrylat, Trimethoxyvinylsilan, Triethoxyvinylsilan, 3-(Trimethoxysilyl)propylmethacrylat, 3-(Methyldimethoxysilyl)propylmethacrylat, 3-(Triethoxysilyl)propylmethacrylat, 3-(Methyldiethoxysilyl)propylmethacrylat,

p-Styryltrimethoxysilan und p-Styryltriethoxysilan ausgewählt ist.

**11.** Protonen-leitende Membran, die eine Übergangsschritt aufweist, umfassend:

die Protonen-leitende Membran gemäß Anspruch 1; und
eine Membran-Elektroden-Übergangsschicht, die an einer Oberfläche oder beiden Oberflächen der Protonen-leitenden Membran bereitgestellt ist,
worin die Membran-Elektroden-Übergangsschicht eine Hydroxylgruppen enthaltende Struktur (P) einschließt, die als aufbauende Elemente einschließt: eine Verbindung (a), die eine Hydroxyalkoxygruppe aufweist; und eine polymerisierbare anorganische Säurekomponente, die Phosphor und/oder ein anorganisches Säurepolymer (b) einschließt.

**12.** Protonen-leitende Membran gemäß Anspruch 1, worin die Protonen-leitende Membran durch ein Polymermaterial (Q) vielfältig verstärkt ist.

**13.** Membran-Elektroden-Aufbau, umfassend:

die Protonen-leitende Membran gemäß Anspruch 1; und
eine Brennstoffelektrode und eine Sauerstoffelektrode, die auf der Protonen-leitenden Membran angeordnet sind.

**14.** Polymerelektrolyt-Brennstoffzelle, die den Membran-Elektroden-Aufbau gemäß Anspruch 13 umfasst.

**15.** Polymerelektrolyt-Brennstoffzelle, umfassend:

eine Einheits-Zelle, die aus dem Membran-Elektroden-Aufbau gemäß Anspruch 13 hergestellt ist, und
ein Paar von Separatoren, die als Durchgänge für Brennstoff und/oder Sauerstoff fungieren und die an den Außenseiten der Einheits-Zelle angeordnet sind,
worin eine Mehrzahl der benachbarten Einheits-Zellen miteinander gekoppelt ist.

**Revendications**

**1.** Membrane conductrice de protons comprenant :

une structure de liaison silicium-oxygène (A), contenant une structure réticulée formée par une liaison silicium-oxygène, et une structure contenant un groupe acide (B) liée de manière covalente à un composé silane et contenant un groupe acide, qui sont couplées l'une à l'autre par une liaison silicium-oxygène,
dans laquelle la structure de liaison silicium-oxygène (A) est obtenue par hydrolyse et polycondensation d'alcoxysilanes ;
dans laquelle la structure contenant un groupe acide (B) comprend une structure dans laquelle un composé silane ($\alpha$) ayant une liaison silicium-oxygène et une double liaison insaturée polymérisable et un composé contenant un groupe acide ($\beta$), qui est choisi dans le groupe constitué par l'acide 2-acrylamide-2-méthylpropane sulfonique, l'acide 2-(méthacryloyloxy)éthylsulfonique, le méthacrylate de 3-sulfopropyle, l'acide p-stilsulfonique, l'acide 4,4-diaminostilbenzène-2,2'-disulfonique et l'acide itaconique bis(3-sulfopropyle), sont liés de manière covalente l'un à l'autre ;
dans laquelle les atomes constituant le groupe acide et l'atome de silicium lié à la structure de liaison silicium-oxygène (A) sont liés par une liaison d'au moins quatre atomes de carbone consécutifs ou plus dans la structure contenant le groupe acide (B).

**2.** Membrane conductrice de protons selon la revendication 1, dans laquelle le composé contenant un groupe acide ($\beta$) comprend trois hétéroatomes protonables ou plus et est n'importe lequel parmi un acrylamide, un acrylate, et un méthacrylate contenant un groupe méthylène.

**3.** Membrane conductrice de protons selon la revendication 1, comprenant en outre un agent de réticulation (C) qui possède, dans une seule molécule, deux groupes fonctionnels ou plus capables de se lier à la structure de liaison silicium-oxygène (A), au composé silane ($\alpha$), ou au composé contenant un groupe acide ($\beta$).

4. Membrane conductrice de protons selon la revendication 3, dans laquelle un poids total de la structure de liaison silicium-oxygène (A) et du composé silane ($\alpha$) est de 40 à 120 % en poids par rapport à l'agent de réticulation (C) ayant au moins une double liaison insaturée polymérisable au sein de ses liaisons concernées.

5. Membrane conductrice de protons selon la revendication 3, dans laquelle un poids du composé silane ($\alpha$) est de 10 à 70 % en poids par rapport à l'agent de réticulation (C) ayant au moins une double liaison insaturée polymérisable au sein de ses liaisons concernées.

6. Membrane conductrice de protons selon la revendication 3, dans laquelle un composé constitué de la structure de liaison silicium-oxygène (A), du composé contenant un groupe acide (B) et de l'agent de réticulation (C), a une structure granulaire qui est un continuum incluant des particules liées les unes aux autres.

7. Membrane conductrice de protons selon la revendication 6, dans laquelle les particules ont une taille moyenne de particules de 3 à 200 nm.

8. Membrane conductrice de protons selon la revendication 3, dans laquelle la structure de liaison silicium-oxygène (A), la structure contenant un groupe acide (B), et l'agent de réticulation (C) ayant au moins une double liaison insaturée polymérisable au sein de ses liaisons concernées, sont liés de manière covalente les uns aux autres.

9. Membrane conductrice de protons selon la revendication 1, dans laquelle la structure de liaison silicium-oxygène (A) est composée d'un ou plusieurs éléments choisis dans le groupe constitué par le 1,2-bis(triéthoxysilyl)éthane ; le 1,6-bis(triméthoxysilyl)hexane ; le 1,9-bis-(triéthoxysilyl)nonane ; le 1,8-bis-(triéthoxysilyl)octane ; le 1,8-bis{diéthoxyméthylsilyl)octane ; le 1,4-bis(triméthoxysilyléthyl)benzène ; le 1,4-bis(triéthoxysilyléthyl)benzène ; le 1,8-bis(méthyldiéthoxysilyl)octane ; le tétraméthoxysilane, le tétraéthoxysilane, le tétraisopropoxysilane, le tétrabutoxysilane, le méthyltriméthoxysilane, le phényltriméthoxysilane, le phényltriéthoxysilane, le diméthyldiméthoxysilane, le phénylméthyldiméthoxysilane, l'éthyltriméthoxysilane, le n-propyltriméthoxysilane, l'i-propyltriméthoxysilane et le n-butyltriméthoxysilane.

10. Membrane conductrice de protons selon la revendication 1, dans laquelle le composé silane ($\alpha$) est choisi dans le groupe constitué par l'acrylate de 3-(triméthoxysilyl)propyle, l'acrylate de 3-(méthyldiméthoxysilyl)propyle, l'acrylate de 3-(triéthoxysilyl)propyle, l'acrylate de 3-(méthyldiéthoxysilyl) propyle, le triméthoxyvinylsilane, le triéthoxyvinylsilane, le méthacrylate de 3-(triméthoxysilyl)propyle, le méthacrylate de 3-(méthyldiméthoxysilyl)propyle, le méthacrylate de 3-(triéthoxysilyl)propyle, le méthacrylate de 3-(méthyldiéthoxysilyl)propyle, le p-styryltriméthoxysilane et le p-styryltriéthoxysilane.

11. Membrane conductrice de protons ayant une couche de jonction, comprenant :

la membrane conductrice de protons selon la revendication 1 ; et
une couche de jonction membrane-électrode qui est prévue sur une surface ou sur les deux surfaces de la membrane conductrice de protons
dans laquelle la couche de jonction membrane-électrode concernée comprend une structure contenant un groupe hydroxyle (P) comprenant comme éléments constitutifs : un composé (a) ayant un groupe hydroxyalcoxy, et un composant acide inorganique polymérisable comprenant du phosphore et/ou un polymère d'acide inorganique (b).

12. Membrane conductrice de protons selon la revendication 1, dans laquelle la membrane conductrice de protons est renforcée de façon multiple par un matériau polymère (Q).

13. Assemblage de membrane-électrode comprenant :

la membrane conductrice de protons selon la revendication 1 ; et
une électrode à combustible et une électrode à oxygène étant disposées sur la membrane conductrice de protons.

14. Pile à combustible à électrolyte polymère comprenant l'assemblage de membrane-électrode selon la revendication 13.

15. Pile à combustible à électrolyte polymère comprenant :

une cellule unitaire constituée de l'assemblage de membrane-électrode selon la revendication 13, et
une paire de séparateurs qui servent de passages de carburant et/ou d'oxygène, étant disposés sur les parties extérieures de la cellule unitaire,
dans laquelle une pluralité de cellules unitaires adjacentes sont couplées les unes aux autres.

FIG. 1

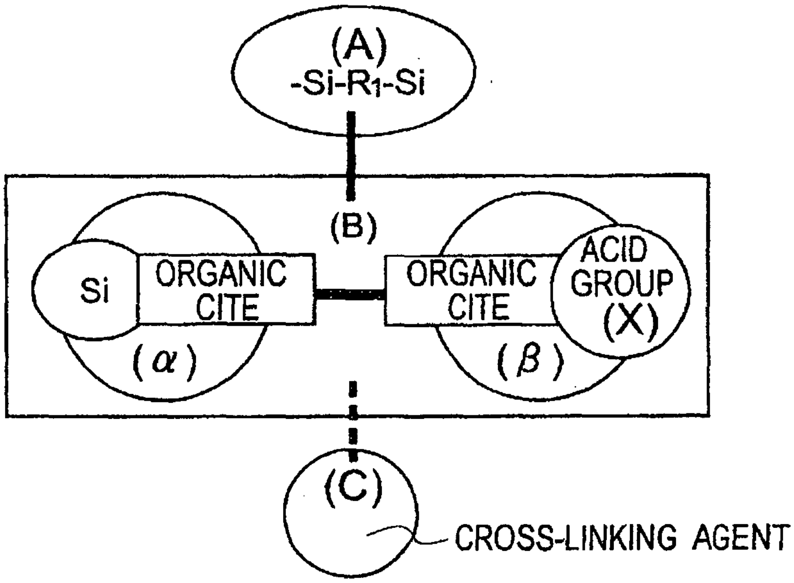


A: SILICON-OXYGEN BONDING STRUCTURE

B: ACID GROUP-CONTAINING STRUCTURE (UNSATURATED DOUBLE BOND-CONTAINING Si COMPOUND(α)+ COMPOUND(β) CONTAINING ACID GROUP AND UNSATURATED DOUBLE BOND)

C: CROSS-LINKING AGENT CONTAINING TWO OR MORE FUNCTIONAL GROUPS LINKABLE TO B

X: ACID GROUP

FIG. 2

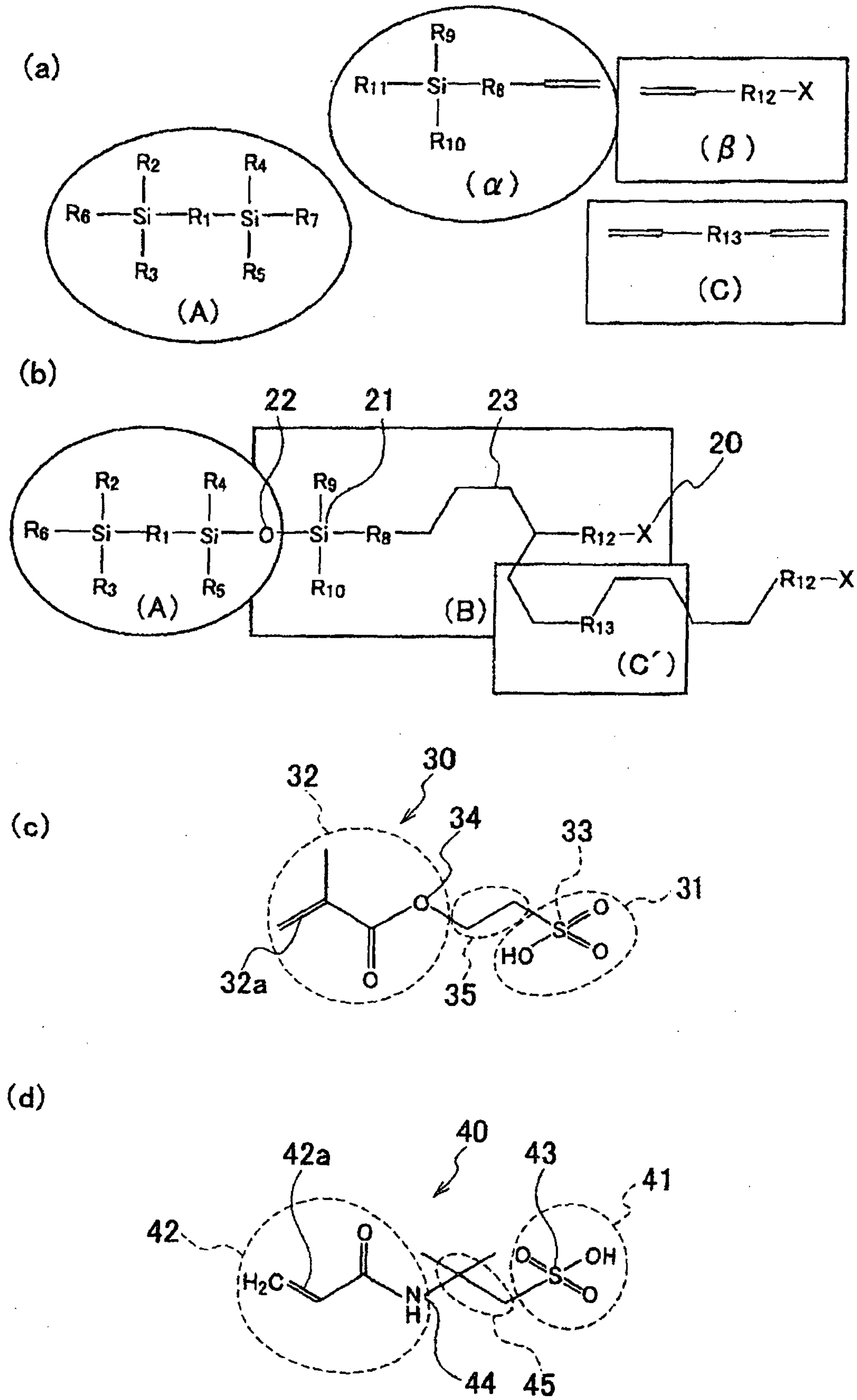

FIG. 3

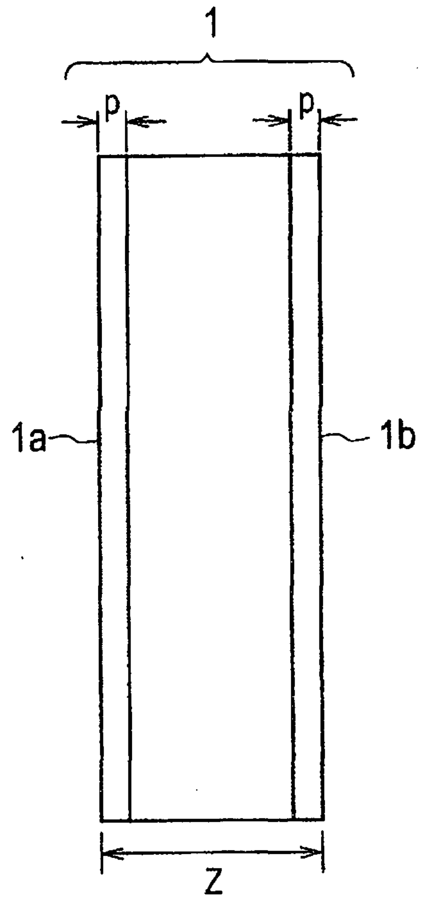

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- US 4330654 A
- JP 4366137 A
- JP 6432665 A
- JP 3679104 B
- US 2004062970 A1
- US 2006194890 A1
- JP 2002184427 A

### Non-patent literature cited in the description

- *J. Polymer Science, Polymer Physics,* 1981, vol. 19, 1687
- **BRINKER.** SOL-GEL SCIENCE. Academic press, Inc, 1990
- **SAKKA.** Chemistry of Sol-gel Method. Agune Shofu Sha, 1988
- Shin Jikken Kagaku Koza. Maruzen, 1976, vol. 15